# EUROPÄISCHE PATENTSCHRIFT

(11) **EP 2 353 191 B1**
(45) Veröffentlichungstag und Bekanntmachung des Hinweises auf die Patenterteilung: **09.01.2019**
(21) Anmeldenummer: 09748052.9
(22) Anmeldetag: 05.11.2009
(51) Int. Cl.: H01L 31/18

(54) **EINLEG-KLEMM-SYSTEM**
INLAY CLAMPING SYSTEM
SYSTÈME DE MONTAGE PAR INSERTION ET SERRAGE

(30) Priorität: 05.11.2008 DE 102008055937
(43) Veröffentlichungstag der Anmeldung: 10.08.2011
(73) Patentinhaber: Schmidt, Christoph, 91710 Gunzenhausen (DE)
(72) Erfinder: Schmidt, Christoph, 91710 Gunzenhausen (DE)
(74) Vertreter: Pfenning, Meinig & Partner mbB
(86) Internationale Anmeldenummer: PCT/EP2009/007936
(87) Internationale Veröffentlichungsnummer: WO 2010/051998

(56) Entgegenhaltungen:
- DE-A1- 3 337 658
- DE-A1- 19 934 059
- DE-A1-102004 026 786
- DE-U1- 9 209 228
- FR-A1- 2 465 315
- JP-A- 2006 132 111
- US-A- 5 571 338
- US-A1- 2004 011 354
- US-A1- 2004 187 909

## Beschreibung

Die vorliegende Erfindung bezieht sich im Bereich der Solarmodulbefestigungstechnik auf ein Montagesystem für Solarmodule.

Heutzutage sind im Wesentlichen drei unterschiedliche Arten von Photovoltaikmodulen, nämlich gerahmte Photovoltaikmodule, ungerahmte Photovoltaikmodule und ungerahmte Photovoltaikmodule mit rückseitig aufgeklebten Trägerprofilen, bekannt. Gerahmte Photovoltaikmodule bestehen aus einer Glasscheibe mit rückseitiger Abdeckung sowie den dazwischen liegenden Solarzellen und einem umlaufenden Rahmen, welcher zumeist aus Aluminium besteht oder dieses enthält. Die Höhe des umlaufenden Rahmens liegt typischerweise in einem Bereich von 30 mm bis 50 mm. Ungerahmte Photovoltaikmodule dagegen weisen in der Regel zwei Glasscheiben auf, zwischen welchen die Solarzellen angeordnet sind. Solche Photovoltaikmodule werden auch als Laminat bezeichnet. Ihre Dicke liegt typischerweise in einem Bereich von 8 mm bis 10 mm. Weisen die ungerahmten Photovoltaikmodule eine Fläche von mehr als 1,5 m² auf, so werden üblicherweise auf deren Rückseite Trägerprofile zur Versteifung angeordnet. Die Trägerprofile bestehen vorzugsweise aus Aluminium oder Stahl oder enthalten eines dieser Materialien. Meist weisen die Trägerprofile eine Höhe im Bereich von 10 mm bis 50 mm auf.

Zur Montage von Photovoltaikmodulen auf Schrägdächern müssen die Module gegen Abrutschen durch ihr Eigengewicht, gegen Winddruckkräfte und Schneelasten sowie gegen Windsogkräfte gesichert werden. Dies kann einerseits dadurch erfolgen, dass die Module mit Profilen, welche mit Dachhaken horizontal auf dem Dach angeordnet sind, mittels Klemmhaltern und/oder Schrauben kraftschlüssig verbunden werden.

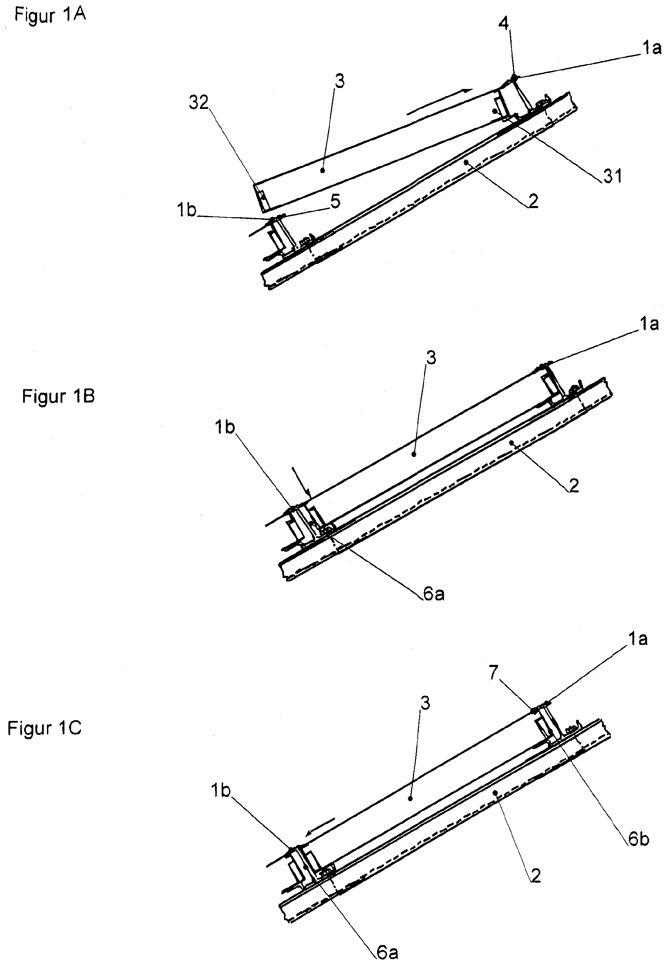

Andererseits können dazu sog. Einlegesysteme verwendet werden, welche im Prinzip aus horizontal angeordneten Profilen mit doppel-T-förmigem Querschnitt bestehen. Die Photovoltaikmodule können dann zwischen die horizontalen Einlegeprofile eingelegt werden. Das Vorgehen beim Einlegen der Module in die Einlegeprofile ist in Figur 1, welche einen Querschnitt senkrecht zur Dachschräge darstellt, gezeigt. Figur 1A zeigt ein oberes Einlegeprofil 1a und ein unteres Einlegeprofil 1b, welche beide an einer Dachschräge 2 befestigt sind. Ein Solarmodul 3 wird in eine Öffnung 4 im oberen Einlegeprofil 1a unter einem Winkel im Bereich von 20° bis 45° in Pfeilrichtung eingelegt. Der Abstand zwischen den beiden Einlegeprofilen 1a und 1b ist so gemessen, dass, sobald die obere umlaufende Seite 31 des Solarmoduls 3 vollständig in die Öffnung 4 eingelegt ist, die untere umlaufende Seite 32 des Solarmoduls 3 über eine Hinterschneidung 5 des unteren Einlegeprofils 1b hinweg in eine Ebene parallel zur Dachschräge gekippt werden kann, wie dies in Figur 1B gezeigt ist. Figur 1B zeigt weiterhin, dass zwischen der unteren umlaufenden Seite des Solarmoduls 3 und dem unteren Einlegeprofil 1b ein Freiraum 6a ausgebildet ist. In diesen Freiraum wird nun, wie durch die Pfeilrichtung in Figur 1C dargestellt, die untere umlaufende Seite 31 des Moduls eingeschoben, so dass zwischen oberer umlaufender Kante 32 des Moduls und oberem Einlegeprofil 1a ein Freiraum 6b entsteht. Da die die Öffnung 4 bildende Hinterschneidung 7 des oberen Einlegeprofils 1a so ausgebildet ist, dass sie auch nach Einschieben des Solarmoduls 3 in das untere Einlegeprofil 1b die obere umlaufende Seite 31 des Solarmoduls 3 umfasst, kann das Solarmodul 3 nicht aus dem Einlegesystem heraus kippen. Bei Einlegesystemen wird das Modul 3 durch das untere Einlegeprofil 1b am Abrutschen gehindert und Windsog und Winddruckkräfte sowie Schneelasten über die obere und untere umlaufende Seite 31 und 32 des Moduls 3 in das Einlegesystem eingeleitet. Wärmedehnungen des Moduls 3 sowie Montagetoleranzen werden durch den im oberen Einlegeprofil 1a entstehenden Freiraum 6b aufgenommen.

Das Befestigen von Solarmodulen an mit Hilfe von mit Dachhaken am Dach befestigten Profilen mittels Klemmhaltern und/oder Schrauben hat den Nachteil, dass die Montage zeitaufwändig und schwierig ist. Zur Befestigung sind zahlreiche Montagekomponenten sowie verschiedenste Werkzeuge nötig. Auch die Befestigung von ungerahmten Modulen sowie ungerahmten Modulen mit rückseitig aufgeklebten Trägerprofilen ist bisher nicht befriedigend gelöst. Außerdem ist es nicht möglich, eine Modulfläche, welche aus einer Vielzahl von Einzelmodulen zusammengesetzt ist, regendicht zu gestalten.

Auch die aus dem Stand der Technik bekannten Einlegesysteme weisen verschiedene Nachteile auf. So ist ein Spiel (Freiraum) zwischen dem Modul und den Einlegeprofilen erforderlich. Dies kann dazu führen, dass bei bestimmten Krafteinwirkungen das Solarmodul hin und her rutscht, was gegebenenfalls zu Lärmbelästigungen oder sogar zum Herausheben des Solarmoduls aus der Verankerung führen kann. Außerdem besteht eine erhöhte Verschmutzungsgefahr bzw. eine Behinderung von Regenwasserabfluss durch das untere Einlegeprofil. Zusätzlich ist auch hier die Herstellung einer regendichten Modulfläche unmöglich.

Die DE 33 37 658 A1 beschreibt eine großflächige Solarplatte mit Halbleiterfotoelementen, wobei die Solarplatte von einem rechtwinkligen Rahmen umgeben ist, von dem im eingebauten, zu horizontalen schrägliegenden Zustand zwei Rahmenteile etwa waagrecht und die zwei anderen zueinander parallelen Rahmenteile etwa in der Pfeillinie geneigt liegen.

Die DE 10 2004 026 786 A1 beschreibt ein Halteprofil und ein Montagesystem für ungerahmte Solarmodule. Das beschriebene Halteprofil umfasst einen in seiner Längsrichtung ausgebildete U-förmige Aufnahmetasche zum Halten der Unterkante eines Solarmoduls, wobei die Aufnahmetasche von einem ersten Teil und einem zweiten Teil gebildet wird. Das erste Teil und das zweite Teil sind lösbar miteinander verbunden und derart gestaltet, dass die Weite der Aufnahmetasche einstellbar veränderbar ist.

Es ist daher das Ziel der vorliegenden Erfindung, ein Montagesystem für ungerahmte Solarmodule mit rückseitigen Trägerprofilen zur Verfügung zu stellen, welches die oben genannten Probleme löst und insbesondere eine besonders schnelle und einfache Montage ermöglicht. Durch das erfindungsgemäße Montagesystem soll überdies eine besonders sichere Befestigung der Module gewährleistet werden.

Diese Aufgabe wird durch das Solarmodulmontagesystem nach Anspruch 1 sowie das Montageverfahren nach Anspruch 14 gelöst. Weitere vorteilhafte Ausführungsformen des erfindungsgemäßen Solarmodulmontagesystems sowie des Verfahrens werden in den jeweiligen abhängigen Ansprüchen gegeben.

Erfindungsgemäß enthält das Solarmodulmontagesystem zumindest eine erste und eine zweite Halteschiene, mindestens ein Klemmstück und mindestens ein rechteckig ausgebildetes Solarmodul, das rückseitig befestigte Trägerprofile aufweist. Dabei weist das rechteckig ausgebildete Solarmodul einen ersten Seitenrandbereich und einen zum ersten Seitenrandbereich parallelen zweiten Seitenrandbereich sowie einen rechten und einen linken Seitenrandbereich auf. Es ist vorgesehen, dass der erste Seitenrandbereich des Solarmoduls von der ersten Schiene gehalten wird und der zweite Seitenrandbereich des Solarmoduls von der zweiten Halteschiene gehalten wird. Dazu sind die erste und die zweite Halteschiene horizontal ausgerichtet und in einem vordefinierten Abstand parallel zueinander angeordnet. Die erste Halteschiene ist daher derart ausgebildet, dass der erste Seitenrandbereich des Photovoltaikmoduls in die erste Halteschiene einlegbar ist. Die zweite Halteschiene ist dagegen derart ausgebildet, dass der zweite Seitenrandbereich des Photovoltaikmoduls, gegebenenfalls über ein auf der zweiten Halteschiene aufliegendes Vertikalprofil, auf die zweite Halteschiene auflegbar und mit Hilfe des mindestens einen Klemmstücks mit der zweiten Halteschiene verklemmbar ist. Das Klemmstück ist so geformt, dass es sich für einen kraft- und/oder formschlüssigen Eingriff mit zumindest der zweiten Halteschiene eignet. Das Solarmodulmontagesystem zeichnet sich ferner dadurch aus, dass das Photovoltaikmodul im zweiten Seitenrandbereich mit den Trägerprofilen auf einer Auflagefläche eines Auflagesteges der zweiten Halteschiene auflegbar und das Klemmstück ausgebildet ist, um im montierten Zustand des Photovoltaikmoduls sich bereichsweise innerhalb eines der Trägerprofile zu befinden und bereichsweise das Photovoltaikmodul mit der zweiten Halteschiene zu verklemmen.

Ist der vordefinierte Abstand zwischen der ersten und der zweiten Halteschiene auf die Ausdehnung des Solarmoduls zwischen erstem Seitenrandbereich und zweitem Seitenrandbereich abgestimmt, so kann eine Befestigung des Solarmoduls durch Einlegen des ersten Seitenrandbereichs des Solarmoduls in die erste Halteschiene, durch Auflegen des zweiten Seitenrandbereichs des Solarmoduls auf die zweite Halteschiene und durch anschließendes Verklemmen des zweiten Seitenrandbereiches mit der zweiten Halteschiene mittels des Klemmstücks erfolgen.

Das Solarmodul ist ein ungerahmtes Photovoltaikmodul (Glas-Glas-Modul) mit rückseitig aufgeklebten Trägerprofilen.

Aufgrund der unterschiedlichen Ausbildungen der Photovoltaikmodule können unter dem Begriff Seitenrandbereich des Photovoltaikmoduls unterschiedliche Bereiche verstanden werden. Bei gerahmten Photovoltaikmodulen ist unter dem Begriff "Seitenrandbereich" die Außenfläche des umlaufenden Rahmens zu verstehen. Bei ungerahmten Photovoltaikmodulen ist dagegen der Bereich einer der Stirnseiten des Laminats und deren Umgebung gemeint. Im Falle von ungerahmten Modulen mit rückseitig aufgeklebten Trägerprofilen ist im Gegensatz dazu der Stirnseitenbereich des Laminats und der Trägeprofile und deren Umgebung oder lediglich der Stirnseitenbereich der Trägerprofile und deren Umgebung als Seitenrandbereich zu verstehen.

Vorzugsweise ist die erste Halteschiene insbesondere an einem ortsfesten Gegenstand, welcher eine schiefe Ebene aufweist, oberhalb der zweiten Halteschiene angeordnet, so dass der erste Seitenrandbereich des Photovoltaikmoduls von unten in die erste oberhalb angeordnete Halteschiene eingelegt wird und der zweite Seitenrandbereich mit der unteren zweiten Halteschiene verklemmt wird. Soll das Photovoltaikmodul jedoch in einer horizontalen Ebene angeordnet werden, so können die erste und die zweite Halteschiene aber auch in einer horizontalen Ebene angeordnet sein.

Häufig soll nicht nur ein einzelnes Photovoltaikmodul montiert werden, sondern mehrere Module, welche dann eine große Fläche ausbilden. Da die Photovoltaikmodule auch so angeordnet werden sollen, dass der zweite Seitenrandbereich eines ersten Photovoltaikmoduls dem ersten Seitenrandbereich eines weiteren Photovoltaikmoduls gegenüber liegt, müssten eigentlich die zweite Halteschiene des ersten Photovoltaikmoduls und die erste Halteschiene des weiteren Photovoltaikmoduls direkt zueinander benachbart angeordnet sein. Insbesondere in einem solchen Fall sind die zweite Halteschiene des ersten Moduls und die erste Halteschiene des weiteren Moduls einstückig ausgebildet. Der Einfachheit halber sind dann vorzugsweise die erste und die zweite Halteschiene eines jeden Photovoltaikmoduls gleichartig ausgebildet und weisen sowohl einen ersten Abschnitt zum Einlegen eines Moduls als auch einen zweiten Anschnitt zum Auflegen und Verklemmen eines Moduls auf.

Um die erste und die zweite Halteschiene an einem ortsfesten Gegenstand befestigen zu können, weist die erste und die zweite Halteschiene jeweils einen ersten Bereich zum Anbringen der Halteschiene an mindestens einem ortsfesten Gegenstand und einen zweiten Bereich zum Einlegen und/oder Verklemmen mindestens eines Seitenrandbereiches mindestens eines Solarmoduls auf. Der erste Bereich kann an einer der Längsseiten der Halteschiene oder aber an den Stirnseiten der Schiene ausgebildet sein.

Der zweite Bereich der ersten Halteschiene weist wie oben bereits erwähnt zumindest einen ersten Abschnitt zum Einlegen des ersten Seitenrandbereiches eines Photovoltaikmoduls auf. Die zweite Halteschiene dagegen weist zumindest einen zweiten Abschnitt zum Auflegen und Verklemmen des zweiten Seitenrandbereiches eines Photovoltaikmoduls auf. Vorzugsweise sind erste und/oder zweite Halteschiene so ausgebildet, dass sie sowohl einen ersten Abschnitt zum Einlegen des ersten Seitenrandbereiches eines ersten Photovoltaikmoduls und einen zweiten Abschnitt zum Auflegen und Verklemmen des zweiten Seitenrandbereiches eines weiteren Photovoltaikmoduls aufweisen. Wie oben bereits erwähnt, können die erste Halteschiene und die zweite Halteschiene gleichartig ausgebildet sein. Insbesondere in einem solchen Fall weist die Halteschiene sowohl einen ersten Abschnitt als auch einen zweiten Abschnitt auf. Der erste und/oder der zweite Abschnitt der Schiene sind bevorzugt auf mindestens einer der Längsseiten der Halteschiene ausgebildet.

Vorzugsweise sind die erste und die zweite Halteschiene derart angeordnet, dass sich der erste Abschnitt der ersten Halteschiene und der zweite Abschnitt der zweiten Schiene gegenüber liegen. Alternativ kann sich auch der erste Abschnitt der zweiten Halteschiene und der zweite Abschnitt der ersten Halteschiene gegenüber liegen. Eine solche Anordnung ermöglicht das Einlegen des ersten Seitenrandbereiches eines Photovoltaikmoduls in eine Halteschiene und das Verklemmen eines zweiten Seitenrandbereiches des Photovoltaikmoduls mit einer weiteren Halteschiene.

Der erste Abschnitt der ersten Halteschiene und gegebenenfalls der zweiten Halteschiene ist so ausgebildet, dass er zumindest eine Einlegefläche und eine Gegenklemmfläche aufweist. Dabei sind Einlegefläche und Gegenklemmfläche in parallel zueinander angeordneten Ebenen ausgerichtet und versetzt zueinander angeordnet. Die parallele Anordnung gewährleistet einen gleichmäßigen Kontakt von Einlegefläche und Gegenklemmfläche mit dem plattenförmig ausgebildeten rechteckigen Solarmodul. Einlegefläche und Gegenklemmfläche sind vorteilhafterweise versetzt angeordnet, um den Einlegevorgang des Photovoltaikmoduls zu erleichtern und somit dem eingelegten und verklemmten Photovoltaikmodul einen möglichst geringen Bewegungsspielraum zu bieten.

Der Abstand zwischen der Ebene, in welcher die Einlegefläche angeordnet ist, und der Ebene, in welcher sich die Gegenklemmfläche befindet, liegt vorzugsweise in einem Bereich von 0,5 mm bis 70 mm, insbesondere in einem Bereich von 30 mm bis 50 mm oder von 8 mm bis 10 mm. Das Glas-Glas-Modul befindet sich zusammen mit den Trägerprofilen zwischen der Einlegefläche und der Gegenklemmfläche.

Der zweite Abschnitt der zweiten Halteschiene und gegebenenfalls der ersten Halteschiene weist eine Auflagefläche und eine Hinterschneidung zum form- und/oder kraftschlüssigen Verklemmen des mindestens einen Klemmstückes auf. Das Klemmstück ist dabei bevorzugt so ausgebildet, dass es einen unteren Bereich zum Verklemmen mit der Hinterschneidung aufweist und einen oberen Bereich, welcher zumindest eine Verklemmfläche ausbildet.

Im verklemmten Zustand sind die Auflagefläche der Halteschiene und die Verklemmfläche des Klemmstücks parallel und in einem Abstand im Bereich von 0,5 mm bis 70 mm, insbesondere in einem Bereich von 30 mm bis 50 mm oder von 8 mm bis 10 mm
oder von 0,5 mm bis 3 mm, voneinander entfernt angeordnet. Das Glas-Glas-Modul oder ein Bereich des Trägerprofils befindet sich zwischen der Auflagefläche und der Verklemmfläche.

Die Einlegefläche der ersten Halteschiene und die Auflagefläche der zweiten Halteschiene liegen vorzugsweise in einer Ebene, welche parallel zu der durch die erste und die zweite Halteschiene aufgespannten Fläche zwischen den beiden Halteschienen ist oder welche um einen Winkel von höchstens 60°, insbesondere höchstens 30°, zu der genannten Fläche zwischen erster und zweiter Halteschiene verkippt ist.

Vorzugsweise weisen die erste und die zweite Halteschiene in ihrem zweiten Bereich zum Einlegen und/oder Verklemmen des Photovoltaikmoduls mindestens eine Abdichtung auf, welche vorzugsweise als Dichtgummi ausgebildet ist. Diese Abdichtung befindet sich bevorzugt auf der Gegenklemmfläche und/oder der Einlegefläche des ersten Abschnitts der ersten Halteschiene und gegebenenfalls der zweiten Halteschiene und auf der Auflagefläche des zweiten Abschnitts der zweiten Halteschiene und gegebenenfalls der ersten Halteschiene. Zusätzlich kann auch das mindestens eine Klemmstück auf seiner Verklemmfläche mindestens eine Abdichtung, insbesondere mindestens einen Dichtgummi, aufweisen.

Das mindestens eine Klemmstück ist weiterhin vorzugsweise derart ausgebildet, dass es in die mindestens eine Hinterschneidung im zweiten Abschnitt der zweiten Halteschiene und gegebenenfalls der ersten Halteschiene steckbar oder einhängbar oder verkeilbar ist und/oder mit der Hinterschneidung verrastbar ist. Ist die Hinterschneidung beispielsweise U-förmig, so kann ein flächig ausgebildetes Klemmstück mit einer Seite in die Hinterschneidung hinein gesteckt werden. Ist die Hinterschneidung dagegen lediglich ein Überstand, so kann ein mit einer Hinterschneidung versehenes Klemmstück in die überstehende Hinterschneidung der Halteschiene eingehängt werden oder mit dieser verrasten. Außerdem kann ein Klemmstück mit Hilfe eines zusätzlichen Verklemmelementes mit der Halteschiene verkeilt werden.

Nach dem Verklemmen des Klemmstücks mit zumindest dem zweiten Abschnitt der zweiten Halteschiene oder gegebenenfalls der ersten Halteschiene sind die Verklemmfläche des mindestens einen Klemmstückes und die Auflagefläche des zweiten Abschnitts der zweiten Halteschiene oder gegebenenfalls der ersten Halteschiene so angeordnet, dass der zweite Seitenrandbereich des Solarmoduls ganz oder teilweise kraft- und/oder formschlüssig umgriffen wird.

Die erste und die zweite Halteschiene sind vorzugsweise stranggepresst und bestehen vorzugsweise aus mindestens einem Metall oder enthalten ein solches. Bevorzugte Metalle sind dabei Aluminium oder Stahl. Auch das mindestens eine Klemmstück ist aus mindestens einem Metall hergestellt oder enthält ein solches. Auch im Falle des mindestens einen Klemmstückes wird vorzugsweise Aluminium oder Stahl verwendet. Alternativ können die Halteschiene und/oder das Klemmstück auch aus mindestens einem Kunststoff oder einem faserverstärkten Kunststoff bestehen oder mindestens eines dieser Materialien enthalten.

Die erste und die zweite Halteschiene weisen bevorzugt eine Grundfläche mit einer ersten und einer zweiten Seite auf, wobei sich der erste Bereich zum Anbringen der Halteschiene an mindestens einem ortsfesten Gegenstand auf der ersten Seite aus der Grundfläche erhebt und der zweite Bereich zum Einlegen und/oder Verklemmen eines Solarmoduls auf der zweiten Seite aus der Grundfläche hervorragt. Die Grundfläche kann dabei planar oder gewölbt oder auf andere Art und Weise geformt sein.

Der erste Bereich der Halteschiene kann beispielsweise in Form einer Wölbung, gegebenenfalls mit Zacken versehen, oder in Form einzelner Zacken auf der ersten Seite der Grundfläche aus der Grundfläche hervorragen. Die einzelnen Zacken können dabei gleiche oder unterschiedliche Form und Größe aufweisen. Eine solche Ausgestaltung des ersten Bereichs einer Halteschiene ermöglicht es, die Neigung der Halteschienen vorzugsweise in Kombination mit einem Grundblech auf einem ortsfesten Gegenstand, beispielsweise einer Gebäudehülle, einfach, z.B. entsprechend der Modulgröße, einstellen zu können.

Aus der Grundfläche der ersten Halteschiene kann sich auf der zweiten Seite der Grundfläche ein Hauptsteg und ein Einlegesteg erheben. Zusätzlich kann die Grundfläche der ersten Halteschiene einen Auflagesteg, welcher aus der Grundfläche hervorragt, aufweisen. Aus der Grundfläche der zweiten Halteschiene kann dagegen zumindest ein Hauptsteg und ein Auflagesteg hervorragen. Zusätzlich kann die Grundfläche der zweiten Halteschiene auch einen Einlegesteg aufweisen. Der Hauptsteg sowie der Einlegesteg und/oder der Auflagesteg der ersten und/oder der zweiten Halteschiene ragen jeweils unter einem Winkel im Bereich von 45° bis 135°, insbesondere im Bereich von 80° bis 100° aus der Grundfläche hervor.

Weist die erste und/oder die zweite Halteschiene neben dem Hauptsteg sowohl einen Einlegesteg als auch einen Auflagesteg auf, so sind die drei Stege derart angeordnet, dass der Hauptsteg zwischen Auflagesteg und Einlegesteg angeordnet ist.

Der Hauptsteg weist eine erste Seite auf, welche dem Einlegesteg zugewandt bzw. dem Auflagesteg abgewandt ist. Weiterhin weist der Hauptsteg eine zweite Seite auf, welche dem Auflagesteg zugewandt bzw. dem Einlegesteg abgewandt ist.

Der Hauptsteg kann auf seiner ersten und/oder seiner zweiten Seite mindestens eine Hinterschneidung aufweisen. Insbesondere im Falle der zweiten Halteschiene oder gegebenenfalls der ersten Halteschiene, falls diese einen zweiten Abschnitt zum Auflegen und Verklemmen eines Solarmoduls aufweist, befindet sich bevorzugt auf der zweiten Seite des Hauptstegs mindestens eine Hinterschneidung, so dass das mindestens eine Klemmstück bereichsweise in diese eingeklemmt werden kann.

Der Hauptsteg und der Einlegesteg der ersten Halteschiene und gegebenenfalls der zweiten Halteschiene sind vorzugsweise so ausgebildet, dass sie den ersten Abschnitt zum Einlegen des ersten Seitenrandbereichs eines Photovoltaikmoduls ausbilden. Der Auflagesteg und der Hauptsteg der zweiten Halteschiene und gegebenenfalls der ersten Halteschiene dagegen sind so geformt, dass sie den zweiten Abschnitt zum Auflegen und Verklemmen des zweiten Seitenrandbereiches eines Photovoltaikmoduls ausbilden.

Der Einlegesteg und/oder der Auflagesteg und/oder der Hauptsteg weisen jeweils zumindest einen Schenkel A auf, welcher auf der zweiten Seite der Grundfläche aus eben dieser Grundfläche herausragt. Zusätzlich können der Hauptsteg und/oder der Einlegesteg und/oder der Auflagesteg einen Schenkel B aufweisen, welcher von der Grundfläche beabstandet am Schenkel A angeordnet ist. Wird der Hauptsteg, der Einlegesteg und/oder der Auflagesteg lediglich durch den Schenkel A gebildet, so ist der jeweilige Steg stiftartig ausgebildet. Existiert hingegen ein Schenkel B, so kann der jeweilige Steg beispielsweise T- oder L-förmig ausgebildet sein. Unter Umständen können der Hauptsteg, der Einlegesteg und/oder der Auflagesteg zusätzliche Schenkel Aufweisen.

Im Falle, dass Hauptsteg, Einlegesteg und/oder Auflagesteg zumindest die Schenkel A und b aufweist, sind die Schenkel A und b in einem Winkel im Bereich von 45° bis 135°, insbesondere im Bereich von 80° bis 100°, zueinander angeordnet.

Ist der Einlegesteg der ersten Halteschiene und gegebenenfalls der zweiten Halteschiene stiftartig ausgebildet, so bildet der maximal von der Grundfläche entfernte Bereich des Schenkels a die Einlegefläche. Ist der Einlegesteg dagegen zumindest aus einem Schenkel A und einem Schenkel B ausgeformt, so wird die Einlegefläche durch die der Grundfläche abgewandte Fläche des Schenkels b des Einlegesteges ausgebildet. Im Falle eines Auflagesteges, welcher stiftförmig ausgebildet ist, ist die Auflagefläche durch den maximal von der Grundfläche entfernten Bereich des Auflagesteges gegeben. Im Falle eines aus einem Schenkel A und einem Schenkel B aufgebauten Auflagesteges wird die Auflagefläche durch die der Grundfläche abgewandte Fläche des Schenkels b des Auflagesteges ausgebildet. Die Gegenklemmfläche kann durch eine der Grundfläche sowie der Einlegefläche zugewandte Fläche des Schenkels b des Hauptsteges ausgebildet sein. Dies bedeutet, dass vorzugsweise zumindest der Hauptsteg der ersten Halteschiene einen Schenkel B aufweist, welcher in einem von der Grundfläche beabstandeten Bereich des Schenkels a des Hauptsteges angeordnet ist.

Insbesondere der Auflagesteg weist vorzugsweise an seinem Schenkel B an dessen dem Hauptsteg bzw. dem Nebensteg zugewandten Rand einen zusätzlichen Schenkel Auf. Der zusätzliche Schenkel ist vertikal angeordnet und vorzugsweise im rechten Winkel zum Schenkel B ausgerichtet. Dieser zusätzliche Schenkel dient als eine Art Abrutschsicherung für das Solarmodul.

Der Auflagesteg der zweiten Halteschiene und gegebenenfalls der ersten Halteschiene kann so ausgebildet sein, dass der Schenkel B auf der dem Hauptsteg zugewandten Seite des Auflagesteges eine Hinterschneidung ausbildet. In diese Hinterschneidung kann beispielsweise das Klemmstück mit seinem zum Verklemmen ausgebildeten ersten Abschnitt eingreifen. Alternativ oder zusätzlich kann der Hauptsteg eine Hinterschneidung, welche in Form eines Überstandes oder L- oder U-förmig ausgebildet ist, aufweisen, in welche das Klemmstück eingreifen kann.

Außerdem kann der Hauptsteg auf seiner ersten Seite einen Fortsatz insbesondere in L- oder U-Form aufweisen. Dieser kann in einem von der Grundfläche maximal entfernten Bereich oder an einer in Richtung der Grundfläche versetzten Stelle des Hauptsteges angeordnet sein. Eine dem Einlegesteg direkt zugewandte Fläche des Fortsatzes kann dann die Gegenklemmfläche ausbilden. Somit dient nicht mehr der Schenkel B des Hauptsteges der Ausbildung der Gegenklemmfläche, sondern besagter Fortsatz. Auch in diesem Fall sind Einlegefläche und Gegenklemmfläche, wie oben bereits erklärt, versetzt zueinander in parallelen Ebenen angeordnet.

Die Steghöhen sind vorzugsweise so gewählt, dass der Hauptsteg weiter aus der Grundfläche hervorragt als der Einlegesteg. Der Auflagesteg dagegen ragt vorzugsweise gleich weit oder weiter als der Einlegesteg aus der Grundfläche der Halteschiene hervor. Außerdem kann die Steghöhe des Auflagesteges geringer, gleich oder sogar höher als die Steghöhe des Hauptsteges sein.

Es besteht die Möglichkeit, dass der Auflagesteg und der Hauptsteg bzw. der Einlegesteg und der Hauptsteg bzw. alle drei Stege einstückig ausgebildet sind und/oder mittels eines länglichen Verbindungselementes miteinander verbunden sind. Dies dient einer Erhöhung der Stabilität der Halteschienen.

Im Folgenden wird näher auf die Beschaffenheit des mindestens einen Klemmstücks eingegangen. So weist das mindestens eine Klemmstück auf seiner Verklemmfläche mindestens eine Abdichtung, insbesondere mindestens einen Dichtgummi, auf. Die Form des Klemmstückes ist so gewählt, dass es je nach Ausbildung der Hinterschneidung im zweiten Bereich der zweiten Halteschiene und gegebenenfalls der ersten Halteschiene einen ersten Bereich aufweist, welcher in die Hinterschneidung eingreift, und einen zweiten Bereich aufweist, welcher eine Verklemmfläche ausbildet. Das Klemmstück kann als Klammer oder als Klemmblock oder als Klemmleiste oder als längliche Platte, insbesondere als Riegel, oder als längliches Klemmelement mit einem L- oder S- oder T- oder U-förmigen Querschnitt gewählt sein.

Das Klemmstück kann aber auch so ausgebildet sein, dass der zweite Seitenrandbereich eines Photovoltaikmoduls von einem oberen Bereich des Klemmstücks umgriffen wird und der zweite Seitenrandbereich des Photovoltaikmoduls gemeinsam mit dem Klemmstück auf die Basisschiene auflegbar und verklemmbar ist. Je nach Ausformung der Halteschiene und des Klemmstücks liegt der Seitenrandbereich des Photovoltaikmoduls dann nur bereichsweise oder gar nicht auf der Auflagefläche auf, sondern das Klemmstück liegt beispielsweise auf der Auflagefläche der Halteschiene auf oder das Solarmodul liegt mit einem vom Seitenrandbereich des Photovoltaikmoduls entfernten Abschnitt der Unterseite des Moduls auf der Auflagefläche der Halteschiene auf.

Im ersten Bereich des Klemmstücks, welcher zum Verklemmen vorgesehen ist, weist das mindestens eine Klemmstück vorzugsweise eine Klemmzunge oder eine Hinterschneidung auf. Weiterhin kann das Klemmstück in seinem ersten und/oder zweiten Bereich einen oder mehrere als Vorsprünge ausgebildete Abstandshalter aufweisen. Diese Abstandshalter sorgen dafür, dass beispielsweise ein definierter Abstand zwischen dem Hauptsteg und dem zweiten Seitenrandbereich des Photovoltaikmoduls besteht, oder dass der untere Bereich des Klemmstücks zum Eingreifen in die dafür vorgesehene Hinterschneidung stabilisiert wird.

Das erfindungsgemäße Solarmodulmontagesystem kann mindestens ein zusätzliches Verklemmelement aufweisen. Dieses besteht vorzugsweise mindestens aus einem Metall, beispielsweise Aluminium oder Stahl und/oder einem Kunststoff und/oder einem faserverstärkten Kunststoff oder enthält mindestens eines dieser Materialien. Das zusätzliche Verklemmelement ist vorgesehen, um das mindestens eine Klemmstück mit der zweiten Halteschiene zu verklemmen.

Als zusätzliches Verklemmelement bieten sich vorzugsweise ein Keil oder ein Excenter oder ein Riegel oder ein Spreizdübel an. Das mindestens eine zusätzliche Verklemmelement ist so angeordnet, dass das mindestens eine Klemmstück gegen einen Bereich des Hauptsteges und/oder des Auflagesteges gepresst wird.

Das Solarmodulmontagesystem kann zusätzlich mindestens zwei Vertikalprofile aufweisen. Diese sind vorzugsweise parallel zueinander und senkrecht zu der ersten und der zweiten Halteschiene in einer Fläche, welche durch die erste und die zweite Halteschiene aufgespannt wird, oder welche dazu im Winkel von höchstens 60°, insbesondere höchstens 30°, gekippt ist, angeordnet. Die Vertikalprofile sind derart ausgebildet, dass der linke und/oder der rechte Seitenrandbereich eines Solarmoduls bereichsweise auf den Vertikalprofilen aufliegen. Insbesondere wenn der rechte Seitenrandbereich eines Solarmoduls und der linke Seitenrandbereich eines weiteren Solarmoduls einander gegenüber liegen, dienen die Vertikalprofile einerseits als Auflagebereich, andererseits als Verbindungsstück zwischen dem einen und dem weiteren Solarmodul und/oder als Wasserablauf. Die Vertikalprofile sind weiterhin so ausgebildet, dass sie zumindest in die erste Halteschiene einlegbar bzw. einhängbar sind und mittels eines Klemmstückes mit der zweiten Halteschiene verklemmbar sind. Dabei kann das Klemmstück derart ausgebildet sein, dass es einerseits mit der zweiten Halteschiene in Eingriff ist, andererseits in den Rahmen des Photovoltaikmoduls geklemmt ist. Vorzugsweise weisen die Vertikalprofile im Auflagebereich des linken bzw. rechten Seitenrandbereiches des Photovoltaikmoduls in der Nähe des ersten Seitenrandbereiches eben dieses Photovoltaikmoduls jeweils eine Verklemmvorrichtung, insbesondere mindestens ein Federblech, auf. Im Gegenzug dazu weist das Photovoltaikmodul zu der genannten Verklemmvorrichtung, beispielsweise einen Anschlagklotz, auf, so dass während des Einlegens des ersten Seitenrandbereiches des Photovoltaikmoduls in die erste Halteschiene die Verklemmvorrichtung mit dem Gegenklemmstück verhakt und somit bereits ein Halten des Photovoltaikmoduls gewährleistet ist. Der zweite Seitenrandbereich des Photovoltaikmoduls liegt bereichsweise auf den Vertikalprofilen auf und wird vorzugsweise durch ein Klemmstück mit der Halteschiene verklemmt, wobei gleichzeitig die Vertikalprofile gegen das Auskippen aus der Ebene, auf welcher das Photovoltaikmodul aufliegt, herauskippt.

Werden mehrere Solarmodule angebracht, wobei jeweils der zweite Seitenrandbereich eines ersten Moduls und der erste Seitenrandbereich eines weiteren Moduls benachbart angeordnet sind, bestehen drei verschiedene Anordnungsvarianten, welche jeweils unterschiedliche Halteschienen erfordern.

So können die Module auf gleicher Ebene angeordnet sein. Dies bedeutet, dass die Auflagefläche und die Einlegefläche einer Halteschiene jeweils auf gleicher Höhe liegt. Andererseits besteht die Möglichkeit, dass die Module auf versetzten Ebenen angeordnet sind. Dabei ist die Auflagefläche einer Halteschiene weiter von der Grundfläche dieser entfernt als die Einlegefläche eben dieser Halteschiene. Zuletzt besteht die Möglichkeit, dass die Module geschindelt angeordnet sind. In diesem Fall ist der zweite Seitenrandbereich des ersten Moduls so angebracht, dass er den ersten Seitenrandbereich eines weiteren Moduls überlappt. Somit ist die Auflagefläche der Halteschiene auf Höhe der Steghöhe des Hauptsteges und somit oberhalb der Einlegefläche und der Gegenklemmfläche ausgebildet. Die Variante, dass die Module auf versetzten Ebenen bzw. geschindelt angeordnet sind, bietet sich insbesondere bei der Montage von Solarmodulen an Schrägdächern oder Konstruktionen, welche eine schiefe Ebene aufweisen, an, da durch diese Variante beispielsweise Platz gespart werden kann.

Wie bereits oben erwähnt, ist der vordefinierte Abstand zwischen erster und zweiter Halteschiene von dem Abstand zwischen dem ersten und dem zweiten Seitenrandbereich des Photovoltaikmoduls oder gegebenenfalls, falls das Modul rückseitig Trägerprofile aufweist und geschindelt angeordnet werden soll, von der Länge der Trägerprofile abhängig. Sollen die Module nun auf gleicher Ebene angeordnet werden, so ist der Abstand zwischen erster und zweiter Halteschiene entsprechend dem Abstand zwischen erstem und zweitem Seitenrandbereich des Solarmoduls zu wählen. Bei einer solchen Anbringung ist es vorteilhaft, wenn die Länge der Trägerprofile dem Abstand zwischen erstem und zweitem Seitenrandbereich des Solarmoduls entspricht oder um weniger als 10 %, insbesondere um weniger als 5 %, kürzer sind. Selbiges gilt vorzugsweise für die Montage der Module auf versetzten Ebenen. Im Falle einer geschindelten Montage der Module ist der vordefinierte Abstand zwischen erster und zweiter Halteschiene um 10 %, insbesondere um 15 %, geringer zu wählen als der Abstand zwischen dem ersten Seitenrandbereich und dem zweiten Seitenrandbereich des Solarmoduls. Werden nun ungerahmte Solarmodule mit rückseitig aufgeklebten Trägerprofilen geschindelt montiert, so ist der vordefinierte Abstand zwischen erster und zweiter Halteschiene entsprechend der Länge der Trägerprofile zu wählen, wobei die Trägerprofile im Bereich des ersten Seitenrandbereiches bündig mit diesem abschließen und die zweite Stirnseite des Glas-Glas-Moduls wesentlich über die Trägerprofile übersteht. Der überstehende Abschnitt des Glas-Glas-Moduls weist eine Ausdehnung von höchstens 15 %, insbesondere höchstens 10 %, der Solarmodulausdehnung auf.

Das mindestens eine Solarmodul des Solarmodulmontagesystems kann an seiner Unterseite im Bereich des ersten Seitenrandbereiches einen Verklemmmechanismus aufweisen, wodurch das Solarmodul mitunter am Abrutschen gehindert werden kann. Als Verklemmmechanismus bietet sich beispielsweise ein an einem Bolzen drehbarer Hebel an, welcher im Rahmen des Moduls integriert ist oder an einem Laminat befestigt ist. Alternativ kann auch ein Anschlagklotz verwendet werden, welcher form- und/oder kraftschlüssig in den ersten Abschnitt zum Einlegen des Moduls eingreift oder mit einer beispielsweise an einem Vertikalprofil angeordneten Feder einrastet.

Weiterhin besteht die Möglichkeit, dass das Solarmodul an seinem ersten Seitenrandbereich eine Zusatzrahmenleiste (Profilleiste) aufweist, wobei die Zusatzrahmenleiste vorzugsweise mit dem Solarmodul kraftschlüssig in Eingriff ist. Die Zusatzrahmenleiste kann so ausgebildet sein, dass sie mindestens einen Überstand aufweist, welcher in eine Hinterschneidung im ersten Abschnitt der ersten Halteschiene eingreift oder verrastet.

Für den Fall, dass mehrere Solarmodule mit einem der bekannten Befestigungsverfahren oder mit den oben beschriebenen Halteschienen so befestigt sind, dass jeweils ein rechter Seitenrandbereich eines ersten Photovoltaikmoduls und ein linker Seitenrandbereich eines weiteren Photovoltaikmoduls einander gegenüber liegen, können diese mit Hilfe eines länglichen Profilstücks verbunden werden, um so eine regendichte Fläche herzustellen. Ein solches Profilstück weist vorzugsweise eine Länge auf, welche dem Abstand zwischen dem ersten und dem zweiten Seitenrandbereich der beiden Module mit einem Fehler von höchstens 30 %, insbesondere von höchstens 10 %, entspricht.

Das längliche Profilstück zum Verbinden eines rechten und eines linken Seitenrandbereiches ist vorzugsweise so ausgebildet, dass es einen doppel-T-förmigen oder einen U-förmigen Querschnitt aufweist. Im Falle eines doppel-T-förmigen Querschnitts mit zwei parallel zueinander angeordneten Schenkeln und einem mittig senkrecht zu den beiden angeordneten Schenkel weist der untere der parallelen Schenkel vorzugsweise zwei Überstände in Richtung des oberen parallelen Schenkels auf. Das doppel-T-förmige Profilstück kann je nach Abstand der parallelen Schenkel für alle drei Ausbildungsarten von Photovoltaikmodulen, also gerahmte sowie ungerahmte Photovoltaikmodule und Module mit rückseitigen Trägerprofilen, verwendet werden. Es wird dabei so angeordnet, dass ein linker Seitenrandbereich eines Moduls rechts von dem senkrecht verlaufenden Schenkel zwischen den parallelen Schenkeln angeordnet ist und dass ein rechter Seitenrandbereich eines weiteren Moduls links vom senkrechten Steg zwischen den beiden parallelen Stegen angeordnet ist.

Das U-förmige Profilstück, welches an seinen parallelen Schenkeln ebenfalls Hinterschneidungen aufweisen kann, wird vorzugsweise für gerahmte Photovoltaikmodule (Rahmen mit oder ohne seitliche Nut) oder Module mit rückseitigen Trägerprofilen verwendet.

Das längliche Profilstück besteht vorzugsweise aus Kunststoff oder faserverstärktem Kunststoff oder enthält einen solchen. Alternativ kann das Profilstück auch aus mindestens einem Metall, vorzugsweise Aluminium oder Stahl, bestehen oder mindestens ein solches enthalten.

Ein Halteschienensystem zum Befestigen eines Objektes, insbesondere eines Photovoltaikmoduls, an einem ortsfesten Gegenstand, weist zumindest eine Halteschiene mit einem ersten Bereich für eine Anbringung der Halteschiene an mindestens einem ortsfesten Gegenstand und einem zweiten Bereich zum Halten mindestens eines zu befestigenden Gegenstandes und mindestens ein Klemmstück auf. Die Halteschiene ist derart ausgebildet, dass sie in ihrem zweiten Bereich mindestens eine Auflagefläche, welche in eine dem ersten Bereich abgewandte Richtung ausgerichtet ist, und mindestens eine Hinterschneidung aufweist. Das Klemmstück ist derart aufgeteilt, dass es einen ersten Abschnitt zum Verhaken mit der mindestens einen Hinterschneidung der Halteschiene und einen zweiten Abschnitt mit mindestens einer Verklemmfläche zum kraft- und/oder formschlüssigen Verklemmen des zu befestigenden Gegenstandes gegen die mindestens eine Auflagefläche der Halteschiene aufweist. Die Verklemmfläche ist nach dem Verklemmen des Klemmstückes mit der Halteschiene parallel zur Auflagefläche der Halteschiene angeordnet. Vorzugsweise liegen Auflagefläche und Verklemmfläche in parallel zueinander angeordneten Ebenen. Nach dem Verklemmen des Klemmstücks mit der Halteschiene ist der zu befestigende Gegenstand dann ganz oder teilweise zwischen Auflagefläche und Verklemmfläche verklemmt.

Ein weiterer Aspekt kann ein Halteschienensystem zum Befestigen eines Objektes, insbesondere eines Photovoltaikmoduls, an einem ortsfesten Gegenstand vorsehen, welches zumindest eine Halteschiene mit einem ersten Bereich für eine Anbringung der Halteschiene an mindestens einem ortsfesten Gegenstand und einem zweiten Bereich zum Halten mindestens eines zu befestigenden Gegenstandes und mindestens ein Klemmstück aufweist, wobei die Halteschiene in ihrem zweiten Bereich mindestens eine Auflagefläche, welche in eine dem ersten Bereich abgewandte Richtung ausgerichtet ist, und mindestens eine Hinterschneidung aufweist, wobei das mindestens eine Klemmstück einen ersten Abschnitt zum Verklemmen mit der mindestens einen Hinterschneidung der Halteschiene und einen zweiten Abschnitt mit mindestens einer Verklemmfläche, welche nach dem Verklemmen mit der Halteschiene der Auflagefläche der Halteschiene gegenüberliegend angeordnet ist, zum kraft- und/oder formschlüssigen Verklemmen des zu befestigenden Gegenstandes, gegebenenfalls über ein auf der zweiten Halteschiene aufliegendes Vertikalprofil, gegen die mindestens eine Auflagefläche der Halteschiene.

Die Halteschiene und das mindestens eine Klemmstück ist vorzugsweise so ausgebildet, wie die zweite Halteschiene und das Klemmstück in Zusammenhang mit dem Solarmodulmontagesystem, welches oben bereits erklärt wurde. So weist die erfindungsgemäße Halteschiene vorzugsweise in ihrem zweiten Bereich einen zweiten Abschnitt zum Auflegen und Verklemmen eines Randbereiches des zu befestigenden Gegenstandes auf. Zusätzlich kann die Halteschiene in ihrem zweiten Bereich einen ersten Abschnitt zum Einlegen eines Randbereiches eines weiteren Gegenstandes aufweisen. Der erste Abschnitt der Halteschiene kann eine Einlegefläche und eine Gegenklemmfläche aufweisen, wobei die Einlegefläche und die Gegenklemmfläche vorzugsweise in parallel zueinander angeordneten Ebenen gegebenenfalls versetzt zueinander angeordnet sind.

Die Einlegefläche und die Gegenklemmfläche sowie die Auflagefläche und die Verklemmfläche nach dem Verklemmen des mindestens einen Klemmstücks mit der Halteschiene weisen vorzugsweise einen Abstand im Bereich von 0,5 mm bis 70 mm, insbesondere in einem Bereich von 30 mm bis 50 mm oder von 8 mm bis 10 mm oder von 0,5 mm bis 3 mm auf.

Die Halteschiene weist bevorzugt an ihrer Gegenklemmfläche und/oder ihrer Einlegefläche und/oder ihrer Auflagefläche mindestens eine Abdichtung auf. Ebenso weist das Klemmstück des erfindungsgemäßen Halteschienensystems vorzugsweise an seiner Verklemmfläche mindestens eine Abdichtung auf. Als Abdichtung dient vorzugsweise ein Dichtgummi.

Das mindestens eine Klemmstück weist vorzugsweise einen ersten Abschnitt zum Verhaken mit der mindestens einen Hinterschneidung der Halteschiene, welche vorzugsweise im zweiten Bereich der Halteschiene angeordnet ist, auf, welcher derart ausgebildet ist, dass er in die Hinterschneidung steckbar oder einhängbar oder verkeilbar und/oder mit der Hinterschneidung verrastbar ist.

Die Halteschiene ist vorzugsweise aus mindestens einem Metall, vorzugsweise Aluminium, hergestellt oder enthält ein solches. Auch das mindestens eine Klemmstück besteht oder enthält mindestens ein Metall, vorzugsweise Aluminium. Die Herstellung der Halteschiene sowie des Klemmstücks erfolgt vorzugsweise durch Strangpressung und anschließendes Absägen auf die gewünschte Länge.

Die Halteschiene weist vorzugsweise eine planar oder gewölbt oder andersartig geformte Grundfläche mit einer ersten und einer zweiten Seite auf, wobei sich der erste Bereich auf der ersten Seite aus der Grundfläche und der zweite Bereich aus der zweiten Seite der Grundfläche erheben.

Auf der ersten Seite der Grundfläche kann beispielsweise eine Wölbung, welche gegebenenfalls mit Zacken versehen ist, oder einzelne Zacken aus der Grundfläche hervorragen. Die Zacken können dabei gleiche oder unterschiedliche Form und Höhe aufweisen. Eine solche Ausgestaltung des ersten Bereichs einer Halteschiene ermöglicht es, die Neigung der Halteschienen in Kombination mit einem Grundblech auf einem ortsfesten Gegenstand, beispielsweise einer Gebäudehülle, einfach einstellen zu können.

Auf der zweiten Seite der Grundfläche erheben sich aus der Grundfläche ein Hauptsteg sowie ein Auflagesteg. Weiterhin kann sich auf der dem Auflagesteg abgewandten Seite des Hauptsteges ein Einlegesteg befinden. Der Einlegesteg und bereichsweise der Hauptsteg bilden den ersten Abschnitt des zweiten Bereichs der Halteschiene aus, während der Auflagesteg und bereichsweise der Hauptsteg den zweiten Abschnitt ausbilden. Vorzugsweise ragen Hauptsteg, Einlegesteg und/oder Auflagesteg unter einem Winkel im Bereich von 45° bis 135°, insbesondere im Bereich von 80° bis 100° aus der Grundfläche heraus. Die Grundfläche kann dabei planar, aber auch gewölbt oder gestuft ausgebildet sein.

Die Halteschiene des Halteschienensystems kann auf der dem Auflagesteg abgewandten Seite und/oder der dem Auflagesteg zugewandten Seite des Hauptsteges mindestens eine Hinterschneidung aufweisen.

Hauptsteg, Einlegesteg, falls dieser vorhanden ist, und/oder Auflagesteg weisen vorzugsweise zumindest einen Schenkel A auf, welcher aus der Grundfläche herausragt. Zusätzlich kann an dem Schenkel A des Hauptsteges, des Auflagesteges und/oder gegebenenfalls des Einlegesteges von der Grundfläche beabstandet ein Schenkel B angeordnet sein. Falls ein Schenkel A und ein Schenkel B existieren, so sind diese vorzugsweise in einem Winkel im Bereich von 45° bis 135°, insbesondere im Bereich von 80° bis 100°, zueinander angeordnet. Der maximal von der Grundfläche entfernte Bereich des Schenkels A des Einlegesteges bzw. die der Grundfläche abgewandte Fläche des Schenkels b des Einlegesteges bilden die Einlegefläche aus. Der maximal von der Grundfläche entfernte Bereich des Schenkels A des Auflagesteges oder die der Grundfläche abgewandte Fläche des Schenkels B des Auflagesteges bildet die Auflagefläche aus. Die Einlegefläche dagegen wird vorzugsweise durch eine der Einlegefläche sowie der Grundfläche zugewandte Fläche des Schenkels B des Hauptsteges ausgebildet.

Der Auflagesteg kann an dem dem Hauptsteg bzw. dem Einlegesteg zugewandten Rand des Schenkels B einen zusätzlichen Schenkel, welcher vorzugsweise senkrecht zum Schenkel B angeordnet ist, aufweisen.

Der Schenkel B des Auflagesteges kann so angeordnet sein, dass er eine Hinterschneidung ausbildet, in welcher gegebenenfalls das Klemmstück verklemmt werden kann.

Der Hauptsteg kann beispielsweise in einem von der Grundfläche maximal entfernten Bereich oder an einer in Richtung der Grundfläche versetzten Stelle auf seiner dem Einlegesteg zugewandten bzw. dem Auflagesteg abgewandten Seite einen Fortsatz aufweisen, welcher stiftartig oder L- oder U-förmig ausgebildet sein kann. Eine der Einlegefläche zugewandte Fläche dieses Fortsatzes kann anstelle der der Grundfläche zugewandten Seite des Schenkels B des Hauptsteges die Gegenklemmfläche ausbilden.

Bezüglich der Steghöhe von Hauptsteg, Auflagesteg und/oder gegebenenfalls Einlegesteg ist es vorteilhaft, wenn der Auflagesteg niedriger, höher oder gleich hoch wie der Hauptsteg ausgebildet ist. Der Einlegesteg dagegen ragt lediglich so weit aus der Grundfläche heraus, dass seine Höhe dem Auflagesteg entspricht oder geringer ist als diese.

Vorteilhafterweise, um eine höhere Stabilität der Halteschiene zu gewährleisten, sind der Auflagesteg und der Hauptsteg oder auch der Hauptsteg, der Auflagesteg und der Einlegesteg einstückig ausgebildet und/oder mittels eines länglichen Verbindungselementes miteinander verbunden.

Das mindestens eine Klemmstück ist vorzugsweise als Klammer, als Klemmblock, als Klemmleiste, als längliche Platte, insbesondere als Klemmriegel, oder als längliches Klemmelement mit einem L- oder S- oder T- oder U-förmigen Querschnitt ausgebildet. Weiterhin können längliche Klemmelemente mit beliebigem Querschnitt gewählt werden, welche eine für die Befestigung eines Objektes besonders vorteilhafte Ausbildungsform aufweisen.

Das Klemmstück weist in seinem ersten Bereich zum Verhaken mittels der Halteschiene vorzugsweise eine Klemmzunge auf. Wird das Klemmstück an die dafür vorgesehene Stelle eingeführt, so verhakt die Klemmzunge bzw. die Hinterschneidung des Klemmstücks mit der Hinterschneidung im zweiten Abschnitt der Halteschiene. Das Klemmstück kann weiterhin ein oder mehrere als Vorsprünge ausgebildete Abstandshalter aufweisen.

Das Halteschienensystem kann mindestens ein zusätzliches Verklemmelement zum Verklemmen des mindestens einen Klemmstücks aufweisen. Dieses Verklemmelement dient dazu, den ersten Bereich des Klemmstückes gegen den Hauptsteg oder gegen den Auflagesteg zu drücken. Das Verklemmelement besteht vorzugsweise aus mindestens einem Kunststoff oder einem faserverstärkten Kunststoff oder enthält einen solchen. Alternativ kann das zusätzliche Verklemmelement auch aus mindestens einem Metall, beispielsweise aus Aluminium oder Stahl, bestehen oder ein solches enthalten. Als zusätzliches Verklemmelement bieten sich vorteilhafterweise ein Keil oder ein Excenter oder ein Riegel oder ein Spreizdübel an.

Das Halteschienensystem wird vorzugsweise als Halteschiene eines Solarmodulmontagesystems verwendet. Dazu werden zwei der Halteschienensysteme parallel zueinander angeordnet und zwischen ihnen das Photovoltaikmodul verklemmt. Weiterhin können aber auch diverse andere Gegenstände, beispielsweise Dachrinnen oder ähnliches, mit Hilfe des erfindungsgemäß ausgestalteten Halteschienensystems befestigt werden.

Im Folgenden soll auf die Montage eines Photovoltaikmoduls mit rückseitig befestigten Trägerprofilen mittels eines Solarmodulmontagesystems eingegangen werden. Vorteilhafterweise werden zunächst mindestens zwei Halteschienen an einem ortsfesten Gegenstand, welcher vorzugsweise ein Schrägdach, ein Flachdach oder ein Rahmengestell in beispielsweise einem Solargarten ist, kraftschlüssig befestigt. Die erste und die zweite Halteschiene werden dabei vorzugsweise in einem vordefinierten Abstand parallel zueinander horizontal angeordnet. Die Montage des Solarmoduls an den Halteschienen erfolgt dann wie nachfolgend beschrieben: Zunächst wird der erste Seitenrandbereich eines Photovoltaikmoduls unter einem Winkel von mehr als 0° zur Einlegefläche in die erste Halteschiene eingelegt. Der erste Seitenrandbereich wird dabei insbesondere in den ersten Abschnitt des zweiten Bereichs der ersten Halteschiene, also zwischen Einlegefläche und Gegenklemmfläche, eingelegt. Anschließend wird der zweite Seitenrandbereich in eine Ebene parallel zur Einlegefläche der ersten Halteschiene, in welcher auch der erste Seitenrandbereich angeordnet ist, gebracht und auf die Auflagefläche der ersten Halteschiene aufgelegt, wobei das Photovoltaikmodul im zweiten Seitenrandbereich mit den Trägerprofilen auf der Auflagefläche aufgelegt wird und sich das Klemmstück bereichsweise innerhalb eines der Trägerprofile unterhalb der Vorsprünge befindet.Dabei wird die Oberseite des Photovoltaikmoduls im ersten Seitenrandbereich gegen die Gegenklemmfläche gedrückt und gegebenenfalls zwischen Einlegefläche und Gegenklemmfläche verklemmt. Zuletzt wird ein Haken in einen oberen Bereich des einen Trägerprofils oberhalb der Vorsprünge eingeführt und das mindestens eine Klemmstück mittels des Hakens in den Bereich der mindestens einen Hinterschneidung im zweiten Abschnitt des zweiten Bereichs der zweiten Halteschiene eingebracht, so dass das Klemmstück in die mindestens eine Hinterschneidung form- und/oder kraftschlüssig eingreift. Dabei wird der zweite Seitenrandbereich des Photovoltaikmoduls ganz oder teilweise zwischen der Auflagefläche der zweiten Halteschiene und dem mindestens einen Klemmstück verklemmt. Das Verklemmen des Klemmstücks erfolgt durch Einstecken, durch Einrasten oder durch Verklotzen.

In einzelnen Fällen, falls das Solarmodulmontagesystem ein zusätzliches Verklemmelement aufweist, wird nach dem Auflegen des zweiten Seitenrandbereiches des Solarmoduls auf die Auflagefläche der zweiten Halteschiene das Klemmstück in den Bereich der Hinterschneidung im zweiten Abschnitt der zweiten Halteschiene eingeführt und anschließend in eben diesen Bereich ein Verklemmelement eingeführt, so dass das Klemmstück in die Hinterschneidung eingreift. Bei manchen besonderen Ausführungsformen des Klemmstücks wird vorzugsweise vor dem Auflegen des zweiten Seitenrandbereiches des Photovoltaikmoduls auf die Auflagefläche der zweiten Halteschiene das Klemmstück bereichsweise um den zweiten Seitenrandbereich des Photovoltaikmoduls herum gelegt. Anschließend wird dann der zweite Seitenrandbereich des Moduls gemeinsam mit dem Klemmstück auf die Auflagefläche der zweiten Halteschiene aufgelegt und gleichzeitig verklemmt.

Das Solarmodulmontagesystem, wie es oben beschrieben wurde, sowie das eben dargestellte Montageverfahren, wird vorzugsweise bei der Anbringung von Photovoltaikmodulen auf beispielsweise einer Gebäudeaußenhülle, beispielsweise an Fassaden oder Dächer, oder einem Rahmengerüst, welches vorzugsweise in einem Solargarten aufgestellt ist, verwendet. Alternativ kann das Solarmodulmontagesystem auch an Carports oder anderen denkbaren Überdachungen angebracht werden.

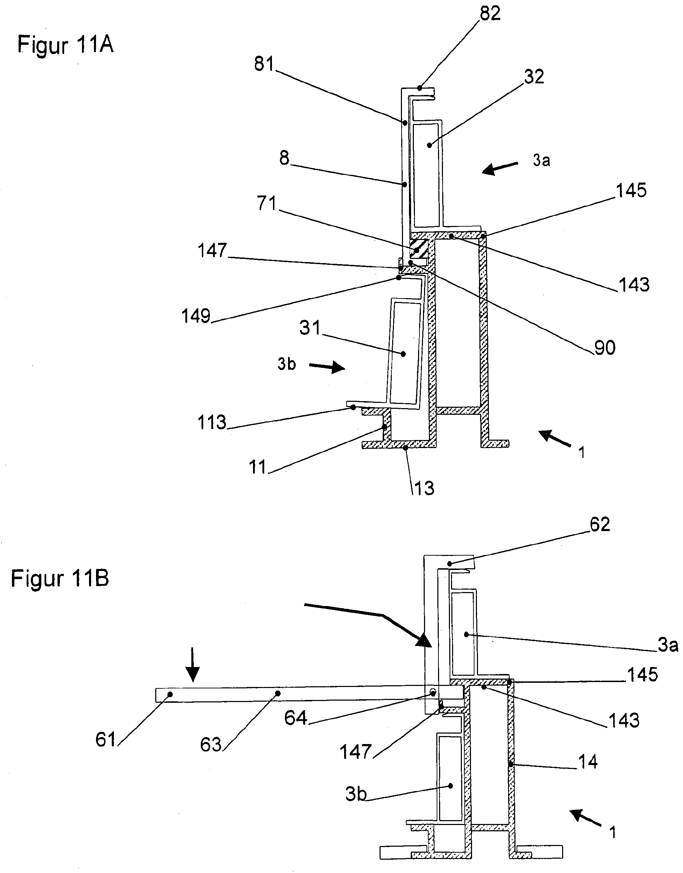

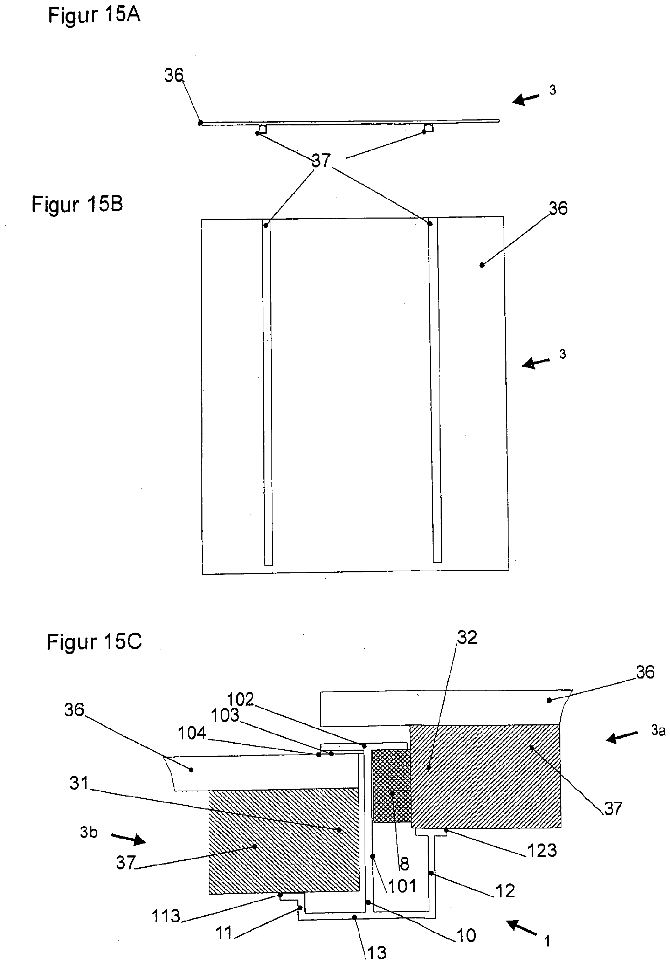

Im Folgenden werden mehrere Beispiele für Solarmodulmontagesysteme sowie ein Ausführungsbeispiel eines erfindungsgemäßen Solarmodulmontagesystems und deren Verwendung gegeben. Die vorliegende Erfindung soll durch die nachfolgenden Beispiele näher erläutert werden, wobei der Umfang der Erfindung nicht auf die Beispiele eingeschränkt werden soll. Es zeigen
Figuren 1A bis 1C
   ein Einlegesystem für Solarmodule gemäß dem Stand der Technik sowie die Montage eines Moduls mit Hilfe des Einlegesystems;
Figuren 2A bis 2C
   verschiedene Anordnungsvarianten von Solarmodulen mit Hilfe eines Solarmodulmontagesystems;
Figuren 3A und 3B
   eine erste Halteschiene eines Solarmodulmontagesystems und den Einlegeprozess eines Solarmoduls in diese erste Halteschiene;
Figuren 4A und 4B
   eine erste Halteschiene eines weiteren Solarmodulmontagesystems und den Einlegeprozess eines Solarmoduls in diese erste Halteschiene;
Figuren 5A und 5B
   eine weitere erste Halteschiene eines weiteren Solarmodulmontagesystems und den Einlegeprozess eines Solarmoduls in diese erste Halteschiene;
Figuren 6A bis 6D
   eine weitere erste Halteschiene eines weiteren Solarmodulmontagesystems und den Einlegeprozess eines auf seiner Rückseite mit Trägerprofilen versehenen Glas-Glas-Moduls in diese, sowie den Querschnitt eines auf die Unterseite eines Glas-Glas-Moduls aufklebbaren Trägerprofils;
Figuren 7A und 7B
   einen Ausschnitt eines weiteren Solarmodulmontagesystems mit einem mit einer Klemmzunge versehenen Klemmstück und den Verklemmprozess;
Figuren 8A und 8B
   einen Ausschnitt eines weiteren Solarmodulmontagesystems mit einem weiteren mit einer Klemmzunge versehenen Klemmstück und den Verklemmprozess;
Figuren 9A bis 9E
   weitere Solarmodulmontagesysteme mit einem mit einer Klemmzunge oder einem Vorstand versehenem Klemmstück, welches in eine Hinterschneidung verklipsbar ist;
Figuren 10A und 10B
   einen Ausschnitt eines weiteren Solarmodulmontagesystems, wobei das Klemmstück in eine U-förmige Hinterschneidung einsteckbar ist;
Figuren 11A und 11B
   einen Ausschnitt eines weiteren Solarmodulmontagesystems mit einem Klemmstück und einem zusätzlichen Verklemmelement sowie eine Hilfsvorrichtung für das Verklemmen eines Solarmoduls;
Figuren 12A bis 12D
   den Prozess des Verklemmens des Solarmoduls mittels des Solarmodulmontagesystem aus Figur 11A;
Figuren 13A bis 13C
   einen Ausschnitt eines weiteren Solarmodulmontagesystems mit einem U-förmigen Klemmstück und verschieden ausgebildeten zusätzlichen Verklemmelementen und Halteschienen;
Figuren 14A bis 14D
   einen Ausschnitt eines weiteren Solarmodulmontagesystems mit Vertikalmodulen aus verschiedenen Ansichten;
Figuren 15A bis 15E
   ein Solarmodul mit rückseitig befestigten Trägerprofilen sowie ein erfindungsgemäßes Solarmodulmontagesystem für Solarmodule mit Trägerprofilen sowie einen Querschnitt durch ein Trägerprofil;
Figur 16
   den erfindungsgemäßen Prozess der Montage eines ungerahmten Solarmoduls mit einem erfindungsgemäßen Solarmodulmontagesystem gemäß den Figuren 15A bis 15E; und
Figuren 17A bis 17D
   einen Querschnitt durch zwei ungerahmte Photovoltaikmodul mit rückseitigem Trägerprofil, welche mit Hilfe eines länglichen Profilstücks regendicht aneinander gereiht sind sowie die Querschnitte durch zwei erfindungsgemäße längliche Profilstücke.

Hierbei zeigen die Figuren 1 bis 14D keine Ausführungsbeispiele der vorliegenden Erfindung. Sie dienen lediglich dazu das Verständnis der in den Figuren 15A bis 17D gezeigten vorliegenden Erfindung zu erleichtern.

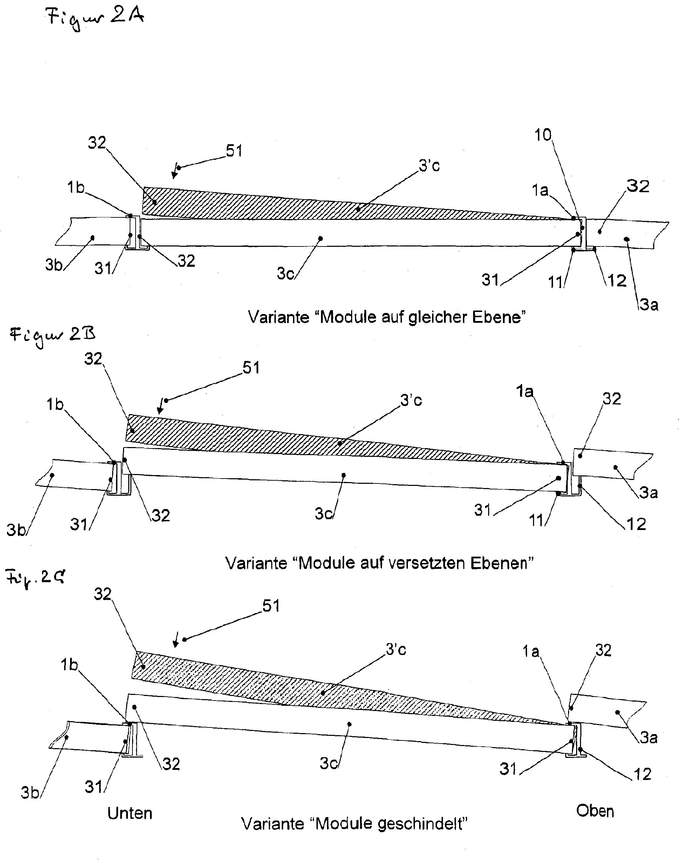

Die Figuren 2A bis 2C zeigen schemenhaft verschiedene Anordnungsmöglichkeiten von Solarmodulen mit Hilfe eines Solarmodulmontagesystems. Figur 2A zeigt dabei die Anordnung von drei Solarmodulen 3a, 3b und 3c auf gleicher Ebene. Figur 2A dagegen zeigt die Anordnung von Photovoltaikmodulen 3a, 3b und 3c auf versetzten Ebenen und Figur 2C zeigt wiederum eine Anordnung von Modulen 3a, 3b und 3c auf versetzten Ebenen, wobei die Module 3a, 3b und 3c dabei geschindelt angeordnet sind. In den drei Figuren 2A bis 2C sind die Halteschienen 1a und 1b jeweils stark vereinfacht dargestellt und weisen keine Möglichkeit zum Verklemmen eines Klemmstückes auf, da der Leser zunächst auf verschiedene Anordnungsvarianten von Solarmodulen aufmerksam gemacht werden soll.

Figur 2A zeigt nun die Seitenansicht eines Ausschnittes eines Solarmodulmontagesystems, bei welchem zumindest drei Solarmodule 3a, 3b und 3c auf gleicher Ebene angeordnet sind. Man erkennt den Querschnitt einer ersten Halteschiene 1a und einer zweiten Halteschiene 1b, welche links in einem bestimmten Abstand von der Halteschiene 1a angeordnet ist. Die beiden Halteschienen 1a und 1b weisen jeweils auf ihrer rechten Seite einen Bereich zum Auflegen eines Photovoltaikmoduls, welcher durch einen Hauptsteg 10 und einen links vom Hauptsteg 10 angeordneten Auflagesteg 12 ausgebildet ist, und auf ihrer linken Seite einen Bereich zum Einlegen eines Photovoltaikmoduls, welcher durch den Hauptsteg 10 und einen rechts vom Hauptsteg 10 angeordneten Einlegesteg 11 ausgebildet ist, auf. Weiterhin ist ein Ausschnitt aus einem rechten Photovoltaikmodul 3a mit einem zweiten Seitenrandbereich 32, welcher auf der rechten Seite der ersten Halteschiene 1a auf dieser aufliegt, und ein Ausschnitt aus einem linken Photovoltaikmodul 3b mit einem ersten Seitenrandbereich 31, welcher auf der linken Seite der zweiten Halteschiene 1b in diese eingelegt ist, dargestellt. Zwischen der ersten und der zweiten Halteschiene 1a und 1b ist ein mittleres Solarmodul 3c mit einem ersten Seitenrandbereich 31, welcher auf der rechten Seite der ersten Halteschiene 1a in diese eingelegt ist, und mit einem zweiten Seitenrandbereich 32, welcher auf der rechten Seite der zweiten Halteschiene auf diese aufgelegt ist. Die drei Solarmodule 3a, 3b und 3c sind so angeordnet, dass alle drei in ein und derselben Ebene liegen. Dies ist dadurch bedingt, dass der Einlegesteg 11 der ersten bzw. der zweiten Halteschiene 1a bzw. 1b die gleiche Höhe aufweist, wie der Auflagesteg 12 der ersten bzw. zweiten Halteschiene 1a bzw. 1b.

Die Referenznummer 3'c deutet das mittlere Solarmodul 3c während des Einlegens des ersten Seitenrandbereiches 31 des Moduls 3c unter einem vorbestimmten Winkel in die erste Halteschiene 1a an. Der Pfeil 51 gibt die Richtung an, in welche der zweite Seitenrandbereich 32 des Solarmoduls 3'c nach dem Einlegen seines ersten Seitenrandbereiches 31 in die erste Halteschiene 1a zu bewegen ist, dass der zweite Seitenrandbereich 32 des mittleren Solarmoduls 3'c auf die zweite Halteschiene 1b aufgelegt wird.

Figur 2B zeigt wiederum eine erste Halteschiene 1a und eine zweite Halteschiene 1b, wobei die zweite Halteschiene 1b in einem vorbestimmten Abstand links von der ersten Halteschiene 1a angeordnet ist. Wiederum ist ein Ausschnitt aus einem rechten Solarmodul 3a mit einem zweiten Seitenrandbereich 32, welcher auf der rechten Seite im zweiten Abschnitt der ersten Halteschiene 1a aufliegt, und ein Ausschnitt aus einem linken Solarmodul 3b mit einem ersten Seitenrandbereich 31, welcher auf der linken Seite im ersten Abschnitt der zweiten Halteschiene in diese eingelegt ist, gezeigt. Weiterhin ist wieder ein mittleres Solarmodul 3c mit einem ersten Seitenrandbereich 31 und einem zweiten Seitenrandbereich 32 dargestellt, welches mit seinem ersten Seitenrandbereich 31 im ersten Abschnitt der ersten Halteschiene in diese eingelegt ist und mit seinem zweiten Seitenrandbereich 32 auf der rechten Seite der zweiten Halteschiene 1b auf dieser aufliegt. In Figur 2B ist im Gegensatz zu Figur 2A zu erkennen, dass die drei Solarmodule 3a, 3b und 3c in parallelen, zueinander versetzten Ebenen angeordnet sind. Dies ist dadurch zu erklären, dass die beiden Halteschienen 1a und 1b derart ausgebildet sind, dass der Einlegesteg 11 auf der linken Seite der beiden Halteschienen 1a und 1b eine geringere Höhe aufweist als der Auflagesteg 12 auf der rechten Seite der beiden Halteschienen 1a und 1b. Auch Figur 2B zeigt wieder ein mittleres Solarmodul 3c', welches unter einem bestimmten Winkel mit seinem ersten Seitenrandbereich 31 in die erste Halteschiene 1a eingelegt ist, sowie den Pfeil mit der Referenznummer 51, welcher die Kipprichtung zum Auflegen des zweiten Seitenrandbereiches 32 auf die zweite Halteschiene angibt.

Figur 2C zeigt wiederum eine erste Halteschiene 1a und eine zweite Halteschiene 1b sowie einen Ausschnitt aus einem rechten Photovoltaikmodul 3a und einem linken Photovoltaikmodul 3b sowie ein mittleres Photovoltaikmodul 3c. Figur 3C unterscheidet sich von Figur 2B lediglich darin, dass der zweite Seitenrandbereich 32 des rechten Photovoltaikmoduls 3a auf dem Hauptsteg 10 der ersten Halteschiene 1a aufliegt und der zweite Seitenrandbereich 32 des mittleren Solarmoduls 3c auf dem Hauptsteg 10 der zweiten Halteschiene 1b aufliegt. In diesem Fall sind der Hauptsteg 10 und der Auflagesteg 12 der ersten und der zweiten Halteschiene 1a und 1b einstückig ausgebildet. Außerdem ist der Abstand zwischen der ersten und der zweiten Halteschiene 1a und 1b geringer als der Abstand zwischen dem ersten Seitenrandbereich 31 und dem zweiten Seitenrandbereich 32 des mittleren Solarmoduls 3c ausgewählt. Somit überlappt der zweite Seitenrandbereich 32 des mittleren Moduls 3c bereichsweise über den ersten Seitenrandbereich 31 des linken Solarmoduls 3b. Ebenso überlappt der zweite Seitenrandbereich 32 des rechten Solarmoduls 3a bereichsweise den ersten Seitenrandbereich 31 des mittleren Moduls 3c. Eine solche Anordnung der Solarmodule in versetzten Ebenen wird geschindelte Anordnung genannt. Figur 2C zeigt wiederum ein unter einem bestimmten Winkel in die erste Halteschiene eingelegtes Solarmodul 3'c sowie die Kipprichtung 51 in Richtung der Auflagefläche für den zweiten Seitenrandbereich 32 des Moduls 3'c.

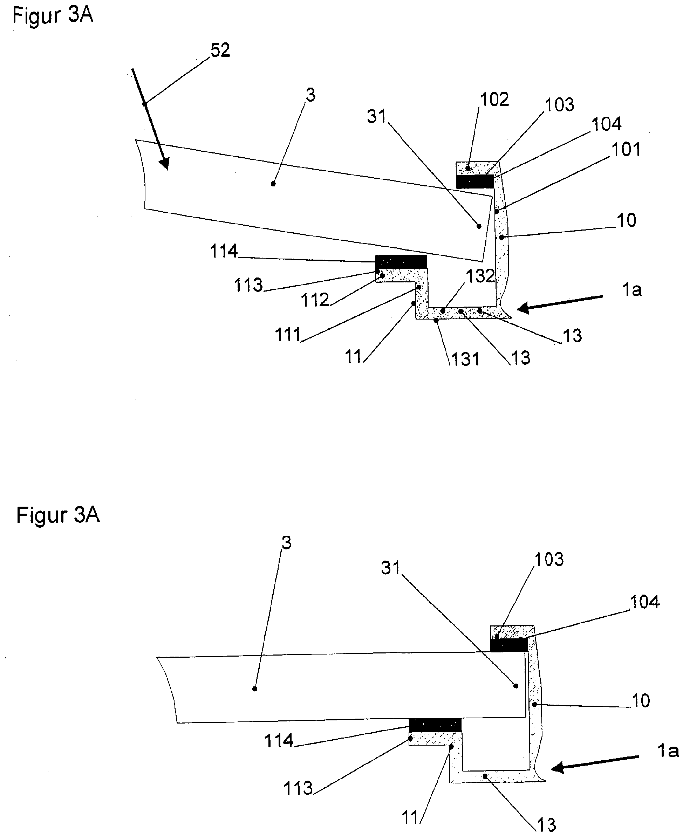

Die Figuren 3A und 3B zeigen jeweils eine Seitenansicht eines Ausschnitts eines Solarmodulmontagesystems, wobei der Querschnitt einer ersten Halteschiene 1a sowie die Seitenansicht eines Ausschnitts eines Solarmoduls 3 mit einem ersten Seitenrandbereich 31 dargestellt ist. Die Figuren 3A und 3B unterscheiden sich lediglich darin, dass in Figur 3A das Solarmodul 3 mit seinem ersten Seitenrandbereich 31 in die erste Halteschiene 1a unter einem bestimmten Winkel eingelegt wird, während das Solarmodul 3 in Figur 3B bereits in seiner endgültigen Ebene positioniert ist.

Die in Figur 3A dargestellte erste Halteschiene 1a weist eine Grundfläche 13 auf, welche in Figur 3A horizontal ausgerichtet ist. Die Grundfläche 13 weist eine erste Seite 131, welche nach unten ausgerichtet ist, und eine zweite Seite 132, welche nach oben ausgerichtet ist, auf. Auf der zweiten Seite 132 der Grundfläche 13 ragen ein Hauptsteg 10 und links vom Hauptsteg 10 angeordnet ein Einlegesteg 11 aus der Grundfläche 13 hervor. Der Hauptsteg 10 ist so ausgebildet, dass er weiter aus der Grundfläche 13 hervorragt als der Einlegesteg 11. Der Hauptsteg 10 ist L-förmig ausgebildet und weist einen senkrecht zur Grundfläche 13 angeordneten Schenkel A 101 und einen parallel zur Grundfläche 13 angeordneten Schenkel B 102 auf, wobei der Schenkel B 102 auf der linken Seite des Schenkels A 101 des Hauptsteges 10 angeordnet ist. Der Schenkel B 102 weist eine untere, der Grundfläche 13 zugewandte Fläche 103 auf, welche als Gegenklemmfläche bezeichnet wird. Auf der Gegenklemmfläche 103 ist ein Dichtgummi 104 angeordnet. Der Einlegesteg 11, welcher links vom Hauptsteg 10 aus der Grundfläche 13 herausragt, ist ebenfalls L-förmig ausgebildet und weist einen senkrecht zur Grundfläche 13 angeordneten Schenkel A 111 und einen auf der linken Seite des Schenkels A 111 des Einlegesteges 11 parallel zur Grundfläche 13 angeordneten Schenkel B 112 auf. Der Schenkel B 112 des Einlegesteges 11 weist eine von der Grundfläche 13 abgewandte Fläche 113 auf, welche als Einlegefläche bezeichnet wird. Auf der Einlegefläche befindet sich ein Dichtgummi 114. Die Einlegefläche 113 des Einlegesteges 11 und die Gegenklemmfläche 103 des Hauptsteges 10 sind zueinander versetzt angeordnet und die Gegenklemmfläche 103 ist so angeordnet, dass sie nicht über den Einlegesteg 111 ragt. Das Solarmodul 3 ist in einem Winkel von ca. 15° zwischen dem Dichtgummi 114 auf der Einlegefläche 113 und dem Dichtgummi 104 auf der Gegenklemmfläche 103 eingelegt. In der in Figur 3A gezeigten Anordnung berührt die rechte Oberkante des Dichtgummis 114 auf dem Einlegesteg 11 die Unterseite des Solarmoduls 3 und die linke Unterkante des Dichtgummis 104 am Hauptsteg 10 die Oberseite des Solarmoduls an einer Stelle benachbart zum ersten Seitenrandbereich 31. Das wie beschrieben positionierte Solarmodul 3 wird anschließend in Richtung des Pfeils 52 in eine Ebene, welche parallel zur Einlegefläche 113 und zur Gegenklemmfläche 103 ist, gekippt.

Figur 3B zeigt wiederum die erste Halteschiene 1a sowie das Solarmodul 3, wobei das Solarmodul in einer Ebene parallel zur Einlegefläche 113 und zur Gegenklemmfläche 103 angeordnet ist. Aufgrund des Einlegens des ersten Seitenrandbereiches 31 des Solarmoduls 3 ist der erste Seitenrandbereich 31 des Solarmoduls 3 nach dem Verkippen in die endgültige Ebene zwischen dem Dichtgummi 104 auf der Gegenklemmfläche und dem Dichtgummi 114 auf der Einlegefläche 113 verklemmt. Die Oberseite des Solarmoduls 3 ist in Figur 3B somit im Bereich des ersten Seitenrandbereiches 31 gegen den Dichtgummi 104 auf der Gegenklemmfläche gedrückt, so dass der Dichtgummi 104 verpresst wird. Ebenso ist die Unterseite des Solarmoduls 3 im Bereich des Seitenrandbereiches 31 des Moduls 3 gegen den Dichtgummi 114 auf dem Einlegesteg 11 gedrückt, so dass der Dichtgummi 114 leicht verpresst ist.

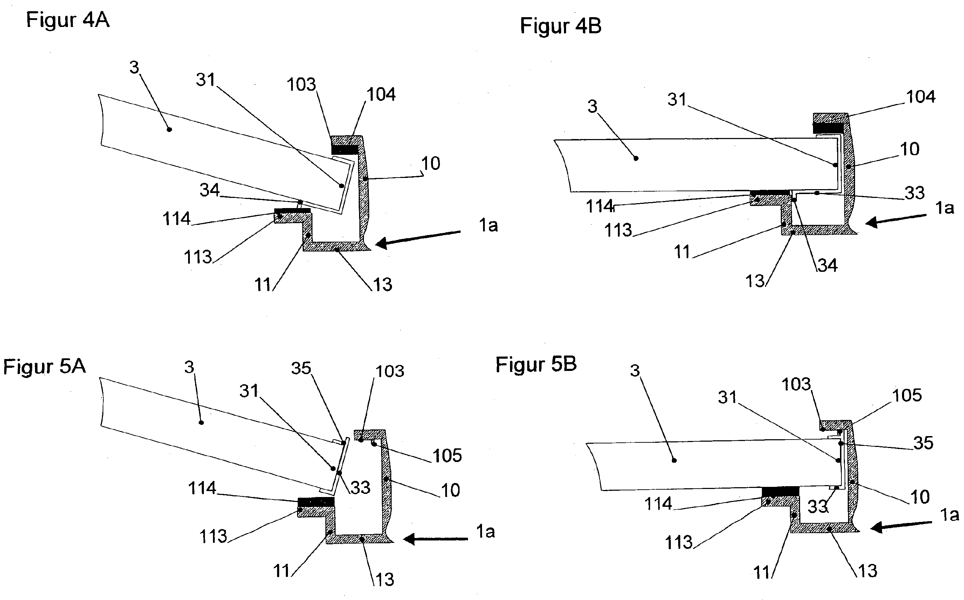

Die Figuren 4A und 4B zeigen einen Ausschnitt aus einem weiteren Solarmodulmontagesystem. Es ist wiederum der Querschnitt einer ersten Halteschiene 1a sowie die Seitenansicht eines Solarmoduls 3 dargestellt. Die erste Halteschiene 1a ist in gleicher Weise ausgebildet, wie die in den Figuren 3A und 3B dargestellte erste Halteschiene. Das Solarmodul 3 weist um seinen ersten Seitenrandbereich 31 eine Zusatzrahmenleiste 33 auf, welche den ersten Seitenrandbereich 31 des Solarmoduls 3 kraft- und formschlüssig einfasst. Die Zusatzrahmenleiste 33 weist an der Unterseite des Solarmoduls 3 einen Vorsprung 34 auf. Dieser Vorsprung 34 ist in einem Abstand von der unteren Kante des Seitenrandbereiches 31 des Solarmoduls 3, welcher dem Abstand zwischen Hauptsteg 10 und Einlegesteg 11 der ersten Halteschiene 1a entspricht, positioniert. In Figur 4A ist das Solarmodul 3 mit der Zusatzrahmenleiste 33 so zwischen dem Hauptsteg 10 und dem Einlegesteg 11 angeordnet, dass der die Oberseite des Solarmoduls 3 kontaktierende Bereich der Zusatzrahmenleiste 33 die linke Unterkante des Dichtgummis 104 am Hauptsteg 10 berührt und dass der Vorsprung 34 der Zusatzrahmenleiste 33 auf dem Dichtgummi 114 auf dem Einlegesteg 11 aufliegt. Durch Kippen des Solarmoduls 3 in eine Ebene parallel zur Einlegefläche 113 und zur Gegenklemmfläche 103 verrastet der Vorsprung 34 der Zusatzrahmenleiste 33 in einem Bereich zwischen Hauptsteg 10 und Einlegesteg 11 mit dem Einlegesteg 11. Eine solche Anordnung ist in Figur 4B gezeigt. Der auf der Oberseite des Solarmoduls 3 angeordnete Bereich der Zusatzrahmenleiste 33 berührt bzw. verdrückt den Dichtgummi 104 am Hauptsteg 10, während die Unterseite des Moduls 3 in einem Bereich, in welchem keine Zusatzrahmenleiste 33 angeordnet ist, auf dem Dichtgummi 114 auf dem Einlegesteg 11 aufliegt. Der Vorsprung 34 der Zusatzklemmleiste ist kraft- und/oder formschlüssig mit der dem Hauptsteg 10 zugewandten Seite des Einlegesteges 11 in Eingriff.

Die Figuren 5A und 5B zeigen einen Ausschnitt aus einem weiteren Solarmodulmontagesystem, wobei eine erste Halteschiene 1a in ihrer Querschnittansicht und ein Solarmodul 3 in seiner Seitenansicht dargestellt sind. Das Solarmodul 3 weist an seinem ersten Seitenrandbereich 31 wiederum eine Zusatzrahmenleiste 33 auf. Die Rahmenleiste 33 weist einen U-förmigen Querschnitt auf und umfasst den ersten Seitenrandbereich 31 des Moduls 3 kraft- und formschlüssig. Im Bereich der oberen Kante des ersten Seitenrandbereiches 31 des Solarmoduls 3 weist die Zusatzrahmenleiste 33 einen Vorsprung 35 senkrecht nach oben auf. Die erste Halteschiene 1a ist ähnlich wie die in den Figuren 3A und 3B dargestellte Halteschiene ausgebildet. Im Gegensatz dazu weist die in den Figuren 5A und 5B dargestellte erste Halteschiene 1a an der Gegenklemmfläche 103 des Hauptsteges 10 keinen Dichtgummi 104, sondern einen Vorsprung 105 auf.

In Figur 5A ist das Solarmodul 3 unter einem Winkel von ca. 15° zur Einlegefläche 113 des Einlegesteges 11 der ersten Halteschiene 1a dargestellt, wobei sich der erste Seitenrandbereich 31 des Moduls 3 direkt oberhalb der Einlegefläche 113 befindet. Zum Einlegen des Solarmoduls 3 muss der erste Seitenrandbereich 31 mit der Zusatzrahmenleiste 33 in dem Bereich unterhalb der Gegenklemmfläche 103 des Hauptsteges 10 eingeschoben werden, so dass sich der Vorsprung 35 in einem Bereich unterhalb der Gegenklemmfläche 103 zwischen der dem Einlegesteg 11 zugewandten Seite des Hauptsteges 10 und dem Vorsprung 105 auf der Gegenklemmfläche 103 des Hauptsteges 10 befindet. Anschließend wird das Solarmodul in eine Ebene parallel zur Einlegefläche 113 des Einlegesteges 11 gekippt, so dass der Vorsprung 35 der Zusatzrahmenleiste 33 und der Vorsprung 105 am Hauptsteg 10 kraftschlüssig ineinander eingreifen. Gleichzeitig liegt die Unterseite in einem Bereich nahe des ersten Seitenrandbereiches 31 des Solarmoduls 3 auf dem Dichtgummi 114 auf und verpresst diesen gegen die Einlegefläche 113 des Steges 11. Figur 5B zeigt einen solchen Zustand.

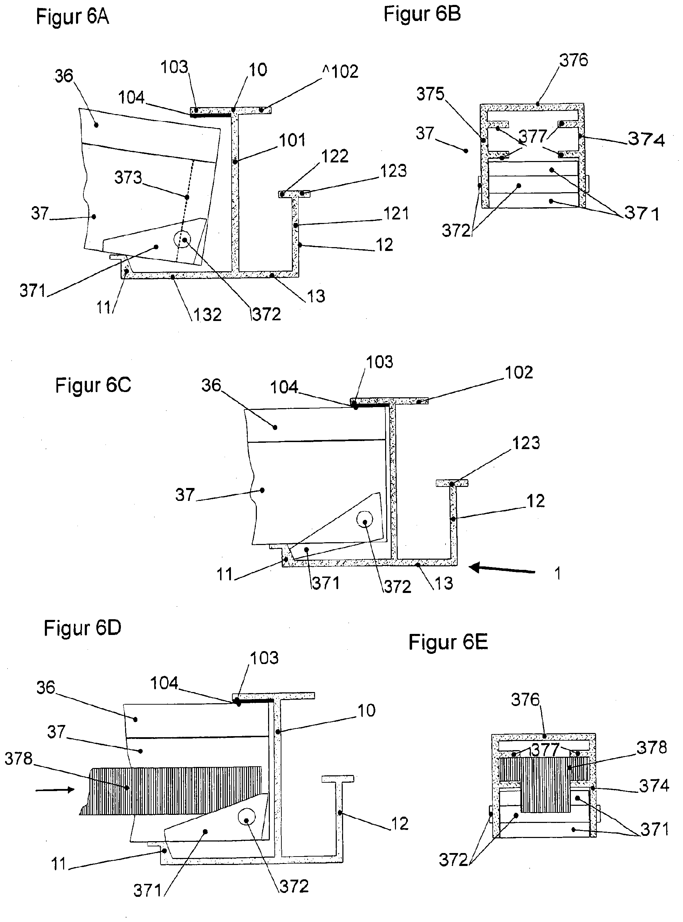

Die Figuren 6A, 6C und 6D zeigen einen Ausschnitt aus einem weiteren Solarmodulmontagesystem. Als Solarmodul wurde in diesem Fall ein ungerahmtes Solarmodul mit rückseitig aufgeklebten Trägerprofilen gewählt. Das Solarmodul weist also an seiner Oberseite ein Glas-Glas-Modul 36 und ein Trägerprofil 37 auf. In den Figuren 6B und 6E ist jeweils der Querschnitt eines Trägerprofils 37 abgebildet.

Figur 6A zeigt nun den Querschnitt einer ersten Halteschiene 1, welche jedoch auch als zweite Halteschiene verwendbar ist. Auf der zweiten Seite 132 der Grundfläche 13 der ersten Halteschiene 1 ragen aus der Grundfläche 13 ein Auflagesteg 12, ein Hauptsteg 10 und ein Einlegesteg 11 hervor. Der Einlegesteg 11 ist L-förmig ausgebildet und weist einen senkrecht zur Grundfläche 13 angeordneten Schenkel A 111 und einen parallel zur Grundfläche 13 angeordneten Schenkel B 112 auf, wobei die von der Grundfläche 13 abgewandte Seite des Schenkels B 112 als Einlegefläche 113 bezeichnet wird. Vom Einlegesteg 11, welcher im linken Bereich aus der Grundfläche 13 herausragt, befindet sich in einem mittleren Bereich der Grundfläche der Hauptsteg 10, welcher T-förmig ausgebildet ist. Der Hauptsteg 10 weist einen senkrecht zur Grundfläche 13 angeordneten Schenkel A 101 und einen parallel zur Grundfläche 13 angeordneten Schenkel B 102 auf. Der Schenkel B 112 des Hauptsteges 10 weist in einem Bereich links des Schenkels A 101 eine der Grundfläche 13 zugewandte Fläche auf, welche als Gegenklemmfläche 103 bezeichnet wird. Auf der Gegenklemmfläche 103 ist ein Dichtgummi 104 flächig aufgebracht. Auf der dem Einlegesteg 11 abgewandten Seite des Hauptsteges 10 erhebt sich von dem Hauptsteg 10 beabstandet der Auflagesteg 12, welcher T-förmig ausgebildet ist. Der Auflagesteg 12 weist somit einen senkrecht zur Grundfläche 13 angeordneten Schenkel A 121 und einen parallel zur Grundfläche 13 angeordneten Schenkel B 122 auf. Die von der Grundfläche 13 abgewandte Fläche des Schenkels B 122 des Auflagesteges 12 wird als Auflagefläche 123 bezeichnet. Die Steghöhen von Einlegesteg 11, Hauptsteg 10 und Auflagesteg 12 sind so gewählt, dass der Auflagesteg 12 höher als der Einlegesteg 11 und niedriger als der Hauptsteg 10 ausgebildet ist. Dies führt schlussendlich zu einer Montage von Solarmodulen in versetzten Ebenen.

Das auf der Rückseite eines Glas-Glas-Moduls 36 angebrachte Trägerprofil 37 ist in Figur 6A so dargestellt, dass die senkrecht angeordnete Seitenwand des Trägerprofils 37 transparent erscheint. Im Bereich des ersten Seitenrandbereiches 31 des Solarmoduls 3 weist das Trägerprofil 37 einen an einem Bolzen 372 drehbaren Hebel 371 auf. Der Hebel 371, welcher keilförmig gestaltet ist, schließt dabei bündig mit der Unterseite des Trägerprofils 37 ab und ist vollständig innerhalb des Trägerprofils 37 angeordnet. Das Solarmodul 3 ist in einem Winkel von ungefähr 15° mit seinem ersten Seitenrandbereich 31 in den Bereich zwischen Einlegesteg 11 und Hauptsteg 10 eingeschoben.

Der in Figur 6B dargestellte Querschnitt durch das Trägerprofil 37 entlang der in Figur 6A angedeuteten Schnittlinie 373 weist eine U-förmige Grundform mit einem rechten 374 und einem linken 375 Schenkel sowie einem oberen Schenkel 376, welcher die Kontaktfläche zum Glas-Glas-Modul 36 darstellt, auf. Der rechte und der linke Schenkel 374 und 375 weisen jeweils zwei einander gegenüber liegende Vorsprünge 377 auf. Der rechte und der linke Schenkel 374 und 375 weisen jeweils eine Bohrung auf, in welcher der Bolzen 372 gelagert ist. Oberhalb und unterhalb des Bolzens 372 ist innerhalb des Trägerprofils 37 die Schnittfläche des drehbaren Hebels 371 abgebildet.

Figur 6C zeigt wiederum die erste Halteschiene 1a und das Solarmodul 3 mit dem Glas-Glas-Modul 36 und dem Trägerprofil 37. Das Solarmodul 3 ist in Figur 6C derart ausgerichtet, dass es sich in der endgültigen Ebene parallel zur Auflagefläche 113 und zur Gegenklemmfläche 103 befindet. Die Oberseite des Solarmoduls, d.h. die Oberseite des Glas-Glas-Moduls 36 ist dabei gegen den Dichtgummi 104 auf der Gegenklemmfläche 102 des Hauptsteges 10 geklemmt und verpresst den Dichtgummi 104. Weiterhin liegt das Trägerprofil 37 mit einem maximal vom Schenkel 376 entfernten Bereich des rechten und des linken Schenkels 374 und 375 auf der Einlegefläche 113 des Steges auf. Der am Bolzen 372 drehbare Hebel 371 ist nun bereichsweise aus dem Trägerprofil herausgekippt und mit der dem Hauptsteg 10 zugewandten Seite des Einlegesteges 11 der ersten Halteschiene verrastet. Durch das Einhaken des Hebels 371 wird das Abrutschen des Solarmoduls verhindert.

Zum Lösen der Verhakung des Solarmoduls 3 mit der ersten Halteschiene 1a ist eine Leiste 378 vorgesehen, welche im Inneren des Trägerprofils 37 in Richtung des Hebels 371 schiebbar ist. Die Leiste 378 weist an ihrem dem Hebel 371 zugewandten Ende eine Verjüngung auf, welche so ausgebildet ist, dass der dreieckig ausgebildete Hebel 371 zurück in das Innere des Trägerprofils 37 zurückklappbar ist und somit die Verankerung in der ersten Halteschiene 1a aufgelöst werden kann. Figur 6E zeigt den Querschnitt durch das Trägerprofil 37 gemeinsam mit der Leiste 378. Die Leiste 378 weist einen T-förmigen Querschnitt auf, wobei der waagerechte Schenkel innerhalb der Vorsprünge 377 an dem rechten und dem linken Schenkel 374 und 375 geführt wird.

Soll nun die Verankerung des Solarmoduls 3 in der ersten Halteschiene 1a aufgehoben werden, so wird die Leiste 378 in Richtung des Hebels 371 geschoben und drückt so gegen einen oberhalb des Bolzens 372 befindlichen Bereich des Hebels 371, so dass der gesamte Hebel 371 in das Innere der Trägerschiene 37 zurückgedreht wird.

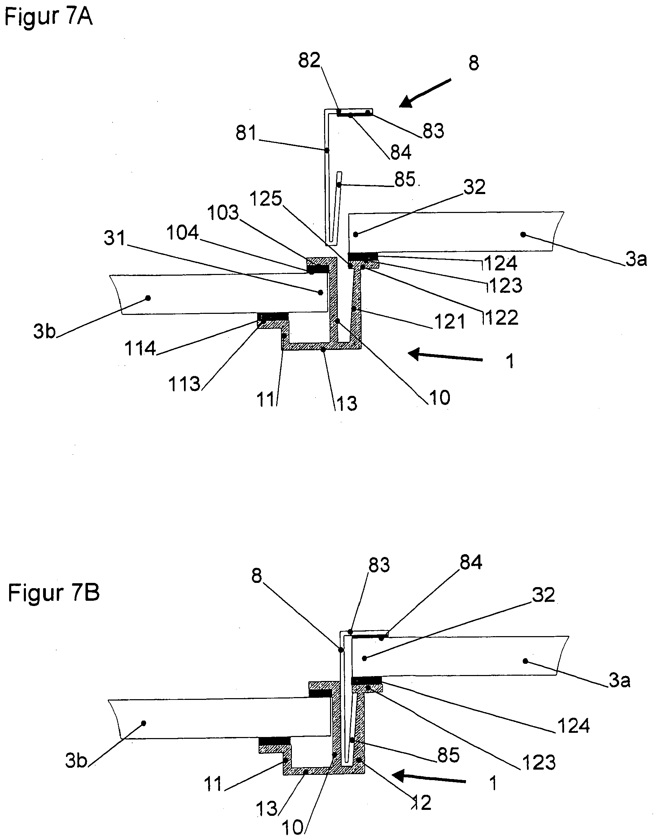

Die Figuren 7A und 7B zeigen einen Ausschnitt aus einem weiteren Solarmodulmontagesystem vor dem Verklemmen und nach dem Verklemmen eines Klemmstücks 8. Es ist der Querschnitt einer Halteschiene 1 sowie eines Klemmstückes 8 und die Seitenansicht von einem ersten Solarmodul 3a und einem zweiten Solarmodul 3b dargestellt. Die Halteschiene 1 weist wieder eine Grundfläche 13 auf, aus welcher ein Hauptsteg 10, ein Einlegesteg 11 und ein Auflagesteg 12 herausragen. Der Hauptsteg 10 sowie der Auflagesteg 11 sind wie der Hauptsteg 10 und der Einlegesteg 11 der in Figur 3A dargestellten ersten Halteschiene 1a ausgebildet. Der Auflagesteg 12 ist T-förmig ausgebildet. Er weist einen senkrecht zur Grundfläche 13 angeordneten Schenkel A 121, welcher einseitig konisch nach oben hin verjüngt ist, und einen zur Grundfläche 13 parallelen Schenkel B 122 auf. Die von der Grundfläche 13 abgewandte Fläche des Schenkels B 122 wird als Auflagefläche 123 bezeichnet. Auf der Auflagefläche 123 befindet sich ein Dichtgummi 124. Durch den auf der dem Hauptsteg 10 zugewandten Seite des Schenkels B 122 befindlichen Bereich des Schenkels B 122 wird eine Hinterschneidung 125 ausgebildet. Die Steghöhen sind so gewählt, dass der Einlegesteg 11 am niedrigsten ist und der Auflagesteg 12 lediglich geringfügig niedriger als der Hauptsteg 10 ausgebildet ist.

Das Klemmstück 8 weist einen vertikal angeordneten Schenkel 81 auf, mit einem unteren Ende und einem oberen Ende. Am oberen Ende schließt sich ein weiterer Schenkel 82 an, welcher eine nach unten ausgerichtete Fläche 83 aufweist, welche als Verklemmfläche bezeichnet wird. Auf der Verklemmfläche 83 ist ein Dichtgummi 84 angeordnet. Am unteren Ende des Schenkels 81 ist eine Klemmzunge 85, welche ungefähr die halbe Länge des Schenkels 81 aufweist, in einem Winkel von wenigen Grad nach oben angeordnet. In der vorliegenden Figur 7A zweigt der Schenkel 82 und die Klemmzunge 85 auf der rechten Seite des Schenkels 81 ab.

Das erste Solarmodul 3a liegt mit seiner Unterseite im Bereich des zweiten Seitenrandbereiches 32 auf dem Dichtgummi 124 auf der Auflagefläche 123 auf. Das zweite Solarmodul 3b ist mit seinem ersten Seitenrandbereich 31 in die Halteschiene 1 eingelegt und zwischen der Einlegefläche 113 und der Gegenklemmfläche 103 mit den Dichtgummis 114 und 104 verklemmt. Figur 7B zeigt wieder das auf die Halteschiene 1 aufgelegte erste Solarmodul 3a und das in die Halteschiene 1 eingelegte zweite Solarmodul 3b. Im Gegensatz zu Figur 7A zeigt Figur 7B die Anordnung nach dem Verklemmen des ersten Solarmoduls 3a. Das Klemmstück 8 ist nun in den Bereich zwischen Hauptsteg 10 und Auflagesteg 12 der Halteschiene 1 eingeführt, so dass die Klemmzunge 85 mit ihrem oberen Ende in die Hinterschneidung 125 des Auflagesteges 12 eingreift. Man erkennt, dass der untere Bereich des Klemmstücks 8 formschlüssig mit der dem Auflagesteg 12 zugewandten Seite des Hauptsteges 10 und der dem Hauptsteg 10 zugewandten Seite des Auflagesteges 12 eingreift. Der Schenkel 82 des Klemmstücks 8 ist nach dem Verklemmen so angeordnet, dass er mit seiner Verklemmfläche 83 den zweiten Seitenrandbereich 32 des ersten Solarmoduls 3a gegen die Auflagefläche 123 des Auflagesteges 12 drückt und damit das Solarmodul 3a mit den Dichtgummis 124 und 84 zwischen der Verklemmfläche 83 und der Auflagefläche 123 verklemmt ist.

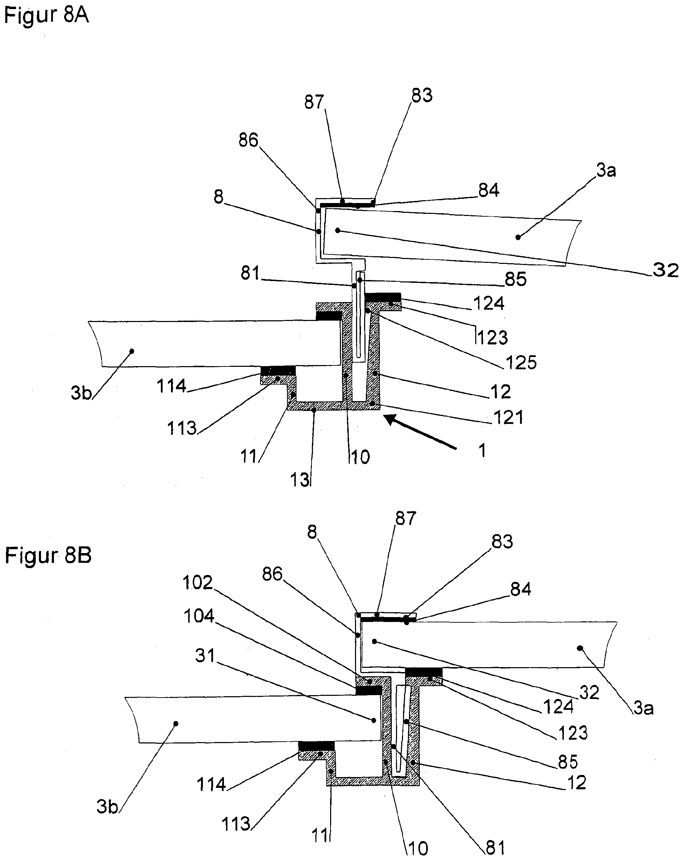

Die Figuren 8A und 8B zeigen wiederum einen Ausschnitt aus einem weiteren Solarmodulmontagesystem, wobei der Querschnitt einer Halteschiene 1 und eines Klemmstücks 8 sowie die Seitenansicht eines ersten Solarmoduls 3a und eines zweiten Solarmoduls 3b dargestellt sind. Die Halteschiene 1 in Figur 8A ist prinzipiell ausgestaltet wie die in den Figuren 7A und 7B dargestellte Halteschiene 1. Lediglich die Steghöhen sind leicht verändert, so dass der Hauptsteg 10 und der Auflagesteg 12 ungefähr gleich weit aus der Grundfläche 13 hervorragen. Das Klemmstück 8 weist einen Schenkel 81 auf, an dessen oberem Ende ein U-förmig ausgestalteter Bereich 86 angeordnet ist und an dessen unteren Bereich eine Klemmzunge 85 angebracht ist. Das Klemmstück 8 weist in seinem U-förmig ausgestalteten Bereich 86, welcher nach rechts geöffnet ist, an einem maximal von dem Steg 81 entfernten Schenkel 87 eine dem Schenkel 81 zugewandte Fläche, eine Verklemmfläche 83, auf. Auf der Verklemmfläche 83 ist ein Dichtgummi 84 angeordnet. Das Klemmstück in Figur 8A ist so angeordnet, dass es mit seinem U-förmigen Bereich 86 den zweiten Seitenrandbereich 32 des ersten Solarmoduls 3a lose umrandet. Der Schenkel 81 des Klemmstücks 8 sowie die Klemmzunge 85, welche eine Länge etwas kürzer als die des Schenkels 81 aufweist, sind bereichsweise zwischen den Hauptsteg 10 und den Auflagesteg 12 der Halteschiene 1 eingeführt, so dass die Klemmzunge 85 in Richtung des Schenkels 81 gedrückt wird. Das zweite Solarmodul 3b ist mit seinem ersten Seitenrandbereich 31 in die Halteschiene 1 eingelegt und zwischen der Gegenklemmfläche 103 und der Einlegefläche 113 mit den Abdichtgummis 104 und 114 verklemmt.

Figur 8B zeigt nun den in Figur 8A dargestellten Ausschnitt eines Solarmodulmontagesystems im verklemmten Zustand. Zum Verklemmen wird der zweite Seitenrandbereich 32 des ersten Solarmoduls 3a gemeinsam mit dem Klemmstück 8 auf die Halteschiene 1 aufgelegt, und das Klemmstück 8 in den Zwischenraum zwischen Hauptsteg 10 und Auflagesteg 12 eingeführt, dass die Klemmzunge 85 in die Hinterschneidung 125 einrastet. Damit greift die Klemmzunge 85 in die Hinterschneidung 125 des Auflagesteges 12 ein und der untere Bereich des Klemmstücks 8 ist formschlüssig mit dem Hauptsteg 10 und dem Auflagesteg 12 in Eingriff. Der an den Schenkel 81 angrenzende Bereich des U-förmigen Bereichs 86 des Klemmstücks liegt auf dem Schenkel B 102 des Hauptsteges 10 auf. Der Schenkel 87 des U-förmig ausgebildeten Bereichs 86 des Klemmstücks 8 drückt den zweiten Seitenrandbereich 32 des Solarmoduls 3a mit der Verklemmfläche 83 gegen die Auflagefläche 123, so dass das Solarmodul 3a zwischen dem Dichtgummi 84 auf der Verklemmfläche 83 und dem Dichtgummi 124 auf der Auflagefläche 123 verklemmt ist.

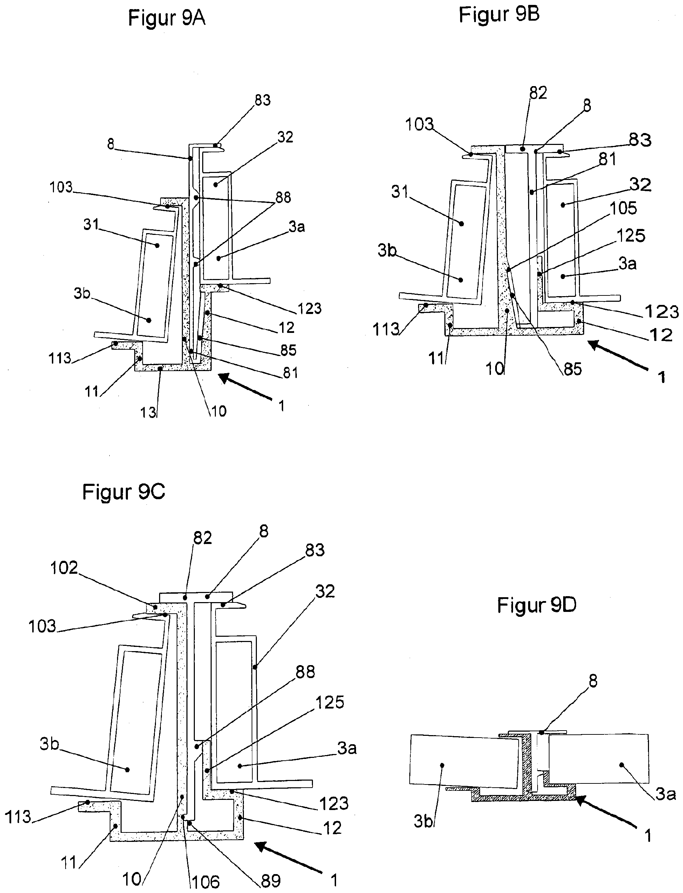

Die Figuren 9A bis 9E zeigen einen Ausschnitt aus verschiedenen Solarmodulmontagesystemen, wobei das Klemmstück 8 jeweils so ausgebildet ist, dass es mit einer Hinterschneidung verrastet oder verklipst.

Figur 9A stellt den Querschnitt einer Halteschiene 1 und eines Klemmstückes 8 sowie eines Rahmens eines ersten Solarmoduls 3a, welcher den zweiten Seitenrandbereich 32 des ersten Solarmoduls 3a beinhaltet und den Querschnitt eines Rahmens eines zweiten Solarmoduls 3b, welcher den ersten Seitenrandbereich 31 des zweiten Solarmoduls 3b enthält. Die Halteschiene 1 ist wie die Halteschiene aus Figur 7A ausgebildet, wobei die Höhe des Auflagesteges 12 ungefähr der halben Höhe des Hauptsteges 10 entspricht. Im Gegensatz zu der in Figur 7A gezeigten Halteschiene existieren im Beispiel der Figuren 9A keine Abdichtgummis 104, 114 und 124. Das Klemmstück 8 ist im Wesentlichen wie das in Figur 7A dargestellte Klemmstück 8 ausgebildet, wobei die Länge der Klemmzunge 85 geringer gewählt wurde. Außerdem weist das in Figur 9A abgebildete Klemmstück 8 oberhalb der Klemmzunge 85 auf der der Klemmzunge 85 zugewandten Seite des Steges 81 zwei Abstandshalter 88 in Form von Vorsprüngen auf. Das erste Solarmodul 3a liegt mit der Unterseite des Rahmens(oder bei Laminaten mit der Unterseite des Solarmoduls) im zweiten Seitenrandbereich 32 des ersten Solarmoduls 3a auf der Auflagefläche 123 des Auflagesteges 12 auf. Das Klemmstück 8 ist mit der Klemmzunge 85 voraus in den Zwischenraum zwischen Hauptsteg 10 und Auflagesteg 12 eingeführt, so dass die Klemmzunge 85 mit der Hinterschneidung 125 des Auflagesteges 12 verrastet ist. Die Abstandshalter 88 berühren die senkrechte Stirnseite des zweiten Seitenrandbereiches 32 des Solarmoduls 3a. Die Verklemmfläche 83 des Klemmstücks 8 drückt das Solarmodul 3a gegen die Auflagefläche 123, so dass das Solarmodul 3 verklemmt ist. Das zweite Solarmodul 3b ist mit seinem im ersten Seitenrandbereich 31 befindlichen Rahmen (oder bei Laminaten mit seinem ersten Seitenrandbereich) in die Halteschiene 1 zwischen Gegenklemmfläche 103 und Einlegefläche 113 eingelegt.

Figur 9B zeigt den Querschnitt einer Halteschiene 1, mit welcher mittels eines Klemmstücks 8 der Rahmenbereich 32 eines Solarmoduls 3a verklemmt ist und der Rahmenbereich 31 eines zweiten Solarmoduls 3b eingelegt ist. Der Hauptsteg 10, der Einlegesteg 11 und der Auflagesteg 12 sind alle L-förmig ausgebildet, wobei der jeweilige zur Grundfläche 13 parallele Schenkel A 102, 112 und 122 links des senkrecht angeordneten Schenkels A 101, 111 und 121 angeordnet ist. Der Hauptsteg 10 weist auf seiner dem Auflagesteg 12 zugewandten Seite in seiner unteren Hälfte eine Hinterschneidung 105 auf. Unterhalb der Hinterschneidung 105 wird der Hauptsteg 10 einseitig breiter. Der Auflagesteg 12 weist an dem dem Hauptsteg 10 zugewandten Ende des Schenkels 122 einen senkrecht nach oben abzweigenden zusätzlichen Schenkel 125 auf. Das Klemmstück 8 weist einen vertikal angeordneten Steg 81 mit einem oberen und einem unteren Ende auf. Am oberen Ende ist senkrecht dazu ein Steg 82 angeordnet, welcher links und rechts des Steges 81 übersteht. Der rechts vom Steg 81 überstehende Bereich des Schenkels 82 weist eine nach unten ausgerichtete Fläche 83 auf, welche eine Verklemmfläche darstellt. Der links vom Steg 81 hervorragende Bereich des Steges 82 dient als Abstandshalter zwischen Hauptsteg 10 und Klemmsstück 8. Am unteren Ende des Schenkels 81 weist das Klemmstück 8 auf der linken Seite des Steges 81 eine Klemmzunge 85 auf. Das Klemmstück 8 ist so in den Zwischenraum zwischen dem Hauptsteg 10 und dem Schenkel 125 des Auflagesteges 12 eingebracht, dass die Klemmzunge 85 mit der Hinterschneidung 105 am Hauptsteg 10 eingreift und formschlüssig auf dem sich verbreiternden Bereich des Hauptsteges 10 aufliegt. Durch den kraftschlüssigen Eingriff von Klemmzunge 85 und Hinterschneidung 105 wird die Verklemmfläche 83 des Klemmstücks 8 gegen die Oberseite des zweiten Seitenrandbereiches 32 des ersten Solarmoduls 3a, welches mit seiner Unterseite auf der Auflagefläche 123 des Auflagesteges 12 aufliegt, gepresst. Somit ist das Solarmodul 3a verklemmt. Das zweite Solarmodul 3b ist zwischen der Gegenklemmfläche 103 und der Einlegefläche 113 in die Halteschiene 1 eingelegt.

In Figur 9C ist wiederum ein Ausschnitt aus einem Solarmodulmontagesystem dargestellt. Die Halteschiene 1 ist ähnlich wie in Figur 9B dargestellt ausgebildet. Der Unterschied liegt lediglich darin, dass der Hauptsteg 10 auf seiner dem Auflagesteg 12 zugewandten Seite in seinem unteren Bereich eine Hinterschneidung 106 aufweist. Das Klemmstück 8 weist einen vertikal ausgerichteten Steg 81 auf, an dessen oberem Ende senkrecht zum Steg 81 ein Schenkel 82 angeordnet ist. Dieser steht wieder rechts und links des Steges 81 über. Der rechts über den Schenkel 81 überstehende Bereich weist eine nach unten ausgerichtete Fläche, die Verklemmfläche 83, auf. An seinem unteren Ende weist der Schenkel 81 nach links einen Fortsatz 89 auf. Auf der rechten Seite des Schenkels 81 ist ein Abstandshalter 88 angeordnet. Das Klemmstück 8 ist so in den Zwischenraum zwischen Hauptsteg 10 und Schenkel 125 des Auflagesteges 12 eingeführt, dass der Überstand 89 des Klemmstücks 8 in die Hinterschneidung 106 des Hauptsteges 10 eingreift. Der Abstandshalter 88 ist zwischen dem Hauptsteg 10 und dem Schenkel 125 des Auflagesteges 12 angeordnet, so dass der Eingriff zwischen Klemmstück und Hauptsteg stabilisiert wird. Der links vom Steg 81 überstehende Bereich des Schenkels 82 liegt auf dem Schenkel B 102 des Hauptsteges 10 auf. Im verklemmten Zustand drückt die Gegenklemmfläche 83 des Klemmstücks 8 den als Rahmen ausgebildeten zweiten Seitenrandbereich 32 gegen die Auflagefläche 123, so dass das Solarmodul 3a verklemmt ist. Das zweite Solarmodul 3b ist mit seinem Rahmen, welcher den ersten Seitenrandbereich 31 des Solarmoduls 3b ausbildet, zwischen der Gegenklemmfläche 103 und der Einlegefläche 113 in die Halteschiene 1 eingelegt.

Figur 9D zeigt einen Ausschnitt aus einem Solarmodulmontagesystem, wobei die Halteschiene 1 und das Klemmstück 8 identisch wie in Figur 3C dargestellt ausgebildet ist. Lediglich die Dimensionen von Halteschiene 1 und Klemmstück 8 sind modifiziert. Anstelle eines ersten gerahmten Solarmoduls 3a und eines zweiten gerahmten Solarmoduls 3b werden in Figur 9D ein erstes ungerahmtes Solarmodul 3a und ein zweites ungerahmtes Solarmodul 3b verwendet.

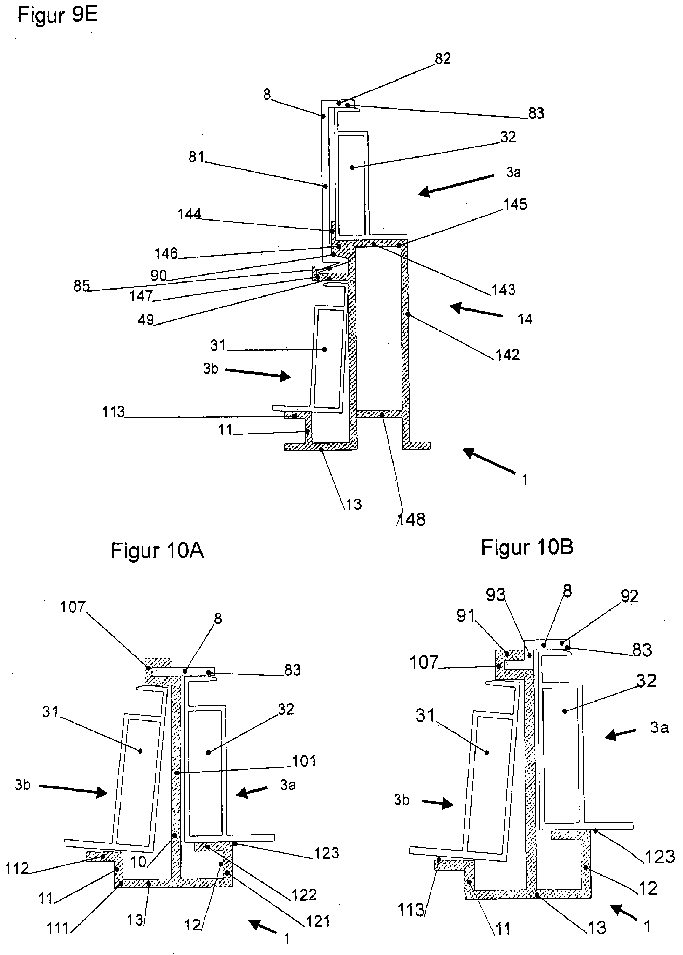

Figur 9E zeigt einen Ausschnitt eines Solarmodulmontagesystems für eine geschindelte Anordnung der Module. Die Halteschiene 1 weist dabei einen Einlegesteg 11 und einen Hauptsteg und einen Auflagesteg auf, wobei Hauptsteg und Auflagesteg einstückig in einem Steg 14 ausgebildet sind. Der Steg 14 weist zwei senkrecht aus der Grundfläche 13 hervorragende Schenkel 141 und 142 auf, wobei der linke Schenkel 141 und der rechte Schenkel 142 an ihren maximal von der Grundfläche 13 entfernten Bereichen einen Verbindungsschenkel 143 aufweisen, welcher links über dem linken Schenkel 141 übersteht. Der Schenkel 143 weist an seinem linken Ende einen vertikal nach oben ausgerichteten Fortsatz 144 auf. Die von der Grundfläche 13 abgewandte Seite des Verbindungsschenkels 143 bildet die Auflagefläche 145 des Steges 14. Der links vom linken Schenkel 143 überstehende Bereich des Verbindungsschenkels 143 weist an seiner Unterseite einen Übergangsbereich 146 mit einer Schräge von links oben nach rechts unten auf. In einem Bereich unterhalb des Verbindungsschenkels 143 ragt auf der linken Seite des linken Schenkels 141 ein L-förmiger Fortsatz 147 derart hervor, dass der lange Schenkel des Fortsatzes 147 senkrecht zum linken Schenkel 141 angeordnet ist und der kurze Schenkel des Fortsatzes 147 senkrecht nach oben ausgerichtet ist. Der linke Schenkel 141 und der rechte Schenkel 142 des Steges 14 sind in ihrem unteren Bereich durch einen weiteren Verbindungsschenkel 148 verbunden, welcher für eine erhöhte Stabilität sorgt.

Das Klemmstück 8 weist einen vertikal ausgerichteten Schenkel 81 mit einem oberen und einem unteren Ende auf. Am oberen Ende ist senkrecht zum Schenkel 81 ein Schenkel 82 angeordnet, welcher nach rechts vom Steg 81 abzweigt und dessen nach unten ausgerichtete Seite die Gegenklemmfläche 83 ausbildet. An seinem unteren Ende weist der Schenkel 81 auf der rechten Seite einen weiteren Schenkel 90 auf, welcher sich nach rechts verjüngt. Am rechten Ende des Schenkels 90 ist nach unten ausgerichtet eine Klemmzunge 85 angeordnet. Ein erstes Solarmodul 3a liegt mit der Unterseite seines als zweiter Seitenrandbereich 32 ausgebildeten Rahmens auf der Auflagefläche 145 des Steges 14 auf. Um das Solarmodul 3a zu verklemmen, wird das Klemmstück 8 von links so in Richtung des Steges 14 und des Solarmoduls 3a bewegt, dass der Schenkel 82 des Klemmstücks 8 oberhalb der Oberseite des Rahmens des Solarmoduls 3a angeordnet ist und gleichzeitig der Schenkel 90 so unter den Übergangsbereich 146 geschoben wird, dass gleichzeitig die Klemmzunge 85 über den kurzen Schenkel des Fortsatzes 147 hinweg bewegt wird und mit diesem verrastet. Aufgrund des Übergangsbereiches 146 des Steges 14 mit der abgewinkelt angeordneten Unterseite wird das Klemmstück 8 während der Bewegung nach rechts nach unten bewegt, so dass die Verklemmfläche 83 den Rahmen 32 des ersten Solarmoduls 3a gegen die Auflagefläche 145 drückt. Das Klemmstück wird mit Hilfe der Klemmzunge 85 an seiner Position festgehalten. Das zweite Solarmodul 3b ist zwischen der Unterseite des langen Schenkels des Fortsatzes 147, welche in diesem Beispiel die Gegenklemmfläche 149 ausbildet, und der Einlegefläche 113 in die Halteschiene 1 eingelegt.

Die Figuren 10A und 10B zeigen jeweils einen Ausschnitt aus weiteren Solarmodulmontagesystemen, wobei das Klemmstück 8 mit seinem ersten Bereich jeweils in eine Hinterschneidung gesteckt ist. Figur 10A zeigt eine Halteschiene 1 mit einem Hauptsteg 10, einem L-förmigen Einlegesteg 11 und einem L-förmigen Auflagesteg 12. Die parallel zur Grundfläche 13 angeordneten Schenkel B 112 und 122 des Einlegesteges 11 und des Auflagesteges 12 sind jeweils auf der linken Seite des Schenkels A 111 und 121 des Einlegesteges 11 bzw. des Auflagesteges 12 angeordnet. Der Hauptsteg 10 weist am oberen Ende des senkrecht auf der Grundfläche 13 stehenden Schenkels A 101 einen U-förmigen Fortsatz 107 auf, wobei der u-förmige Fortsatz 107 links vom Schenkel A 101 des Hauptsteges 10 so angebracht ist, dass die Öffnung des U-förmigen Bereichs 107 nach rechts, also in Richtung des Auflagesteges 12, geöffnet ist.

Das Klemmstück 8 ist in diesem Beispiel plattenförmig ausgebildet. Das erste Solarmodul 3a ist mit seinem zweiten Seitenrandbereich 32 auf der durch den Schenkel B 122 ausgebildeten Auflagefläche 123 aufgelegt und mit Hilfe des Klemmstücks 8 gegen die Auflagefläche 123 geklemmt. Dabei ist das Klemmstück 8 bereichsweise in die Öffnung des U-förmigen Fortsatzes 107 so eingebracht, dass der andere Teil des Klemmstücks 8 rechts über den Schenkel A 101 des Hauptsteges 10 übersteht und eine der Grundfläche 13 zugewandte Verklemmfläche 83 ausbildet. Das zweite Solarmodul 3b ist mit seinem ersten Seitenrandbereich 31 zwischen die Einlegefläche 113 des Einlegesteges 11 und einen der Grundfläche 13 direkt zugewandten Bereich des U-förmigen Fortsatzes 107 des Hauptsteges 10 eingelegt.

Figur 10B zeigt einen Ausschnitt aus einem Solarmodulmontagesystem, wobei das Klemmstück 8 ähnlich wie in Figur 10A dargestellt in eine Öffnung im Hauptsteg 10 eingesteckt ist. Die Halteschiene 1 ist ähnlich wie unter Figur 10A beschrieben ausgebildet, wobei der Auflagesteg 12 weiter aus der Grundfläche 13 hervorragt als der Einlegesteg 11. Das Klemmstück 8 ist länglich ausgebildet und Figur 10B zeigt seinen S-förmigen Querschnitt mit einem unteren Schenkel 91 einem dazu parallelen oberen Schenkel 92 und einem Verbindungsschenkel 93. Das erste Solarmodul 3a ist mit der Unterseite des Rahmens, welcher den zweiten Seitenrandbereich 32 ausbildet, auf die Auflagefläche 123 aufgelegt und das Solarmodul 3a ist mit Hilfe des Klemmstücks 8 gegen die Auflagefläche 123 verklemmt. Dazu ist das Klemmstück 8 mit seinem unteren Schenkel 91 in die Öffnung des U-förmigen Fortsatzes 107 des Hauptsteges 10 eingeführt, so dass der obere Schenkel 92 des Klemmstücks 8 auf der rechten Seite des Schenkels A 101 des Hauptsteges 10 übersteht und eine der Grundfläche 13 zugewandte Gegenklemmfläche 83 ausbildet. Der zweite Seitenrandbereich 32 des Solarmoduls 3a befindet sich also zwischen der Auflagefläche 123 des Auflagesteges 12 und der Verklemmfläche 83 des Klemmstücks 8. Das zweite Solarmodul 3b ist wieder mit seinem ersten Seitenrandbereich 31 zwischen der Einlegefläche 112 und dem der Grundfläche 13 zugewandten Bereich des Fortsatzes 107 des Hauptsteges 10 eingelegt.

Figur 11A zeigt einen Ausschnitt aus einem weiteren Solarmodulmontagesystem, wobei der zweite Seitenrandbereich 32 eines Solarmoduls 3A mittels eines Klemmstücks 8 und eines zusätzlichen Verklemmelementes 71 in Form eines Klotzes verklemmt ist. Die Halteschiene 1 ist ähnlich wie unter Figur 9E beschrieben ausgebildet, wobei unterhalb des über den linken Schenkel 141 überstehenden Bereichs des Verbindungsschenkels 143 kein Übergangs bereich 146 ausgebildet ist. Die Halteschiene 1 ist für eine geschindelte Anordnung der Solarmodule geeignet und weist einen Steg 14 mit einer Auflagefläche 145 und einem L-förmigen Fortsatz, welcher eine Gegenklemmfläche 149 ausbildet, sowie einen Einlegesteg 11 mit einer Einlegefläche 113 auf. Das Klemmstück 8 ist wiederum länglich ausgebildet und Figur 11A zeigt einen klammerförmigen Querschnitt in Form eines U mit einem langen, vertikal angeordneten Schenkel 82, einem oberen kurzen Schenkel 82 und einem unteren kurzen Schenkel 90 auf, wobei der untere Schenkel 90 sich nicht verjüngt. Das zusätzliche Verklemmelement 71 ist als länglicher Klotz mit rechteckigem Querschnitt ausgebildet. Das erste Solarmodul 3A liegt mit der Unterseite seines Rahmens 32 auf der Auflagefläche 145 auf und wird mit Hilfe des Klemmstücks 8, welches an seinem oberen kurzen Schenkel 82 mit der Oberseite des Rahmens 32 des Solarmoduls 3a in Kontakt ist, gegen die Auflagefläche 145 gedrückt. Dies erfolgt dadurch, dass der untere kurze Schenkel 90 des Klemmstücks 8 mit Hilfe des zusätzlichen Verklemmelementes 71, welches im Bereich oberhalb des Fortsatzes 147 mit dem Steg 14 und dem Klemmstück 8 in Kontakt ist, gegen die der Grundfläche 13 zugewandte Seite des Fortsatzes 147 gedrückt wird. Das zweite Solarmodul 3b ist mit seinem ersten Seitenrandbereich 31 zwischen der Einlegefläche 113 und der der Grundfläche 13 zugewandten Seite des Fortsatzes 147 eingelegt.

Figur 11B zeigt eine Halteschiene 1, wie sie in Figur 11A dargestellt ist, sowie die Querschnitte eines Rahmens eines Solarmoduls 3a und eines Solarmoduls 3b. Außerdem ist eine Vorrichtung 61 dargestellt, welche sich zum Vorspannen der Module eignet, um im Anschluss das zusätzliche Verklemmelement 71 leicht in den dafür vorgesehenen Bereich zwischen Klemmstück 8 und Steg 14 auf dessen linker Seite unterhalb des überstehenden Schenkels 143 einzuschieben. Die Vorrichtung 61 weist einen L-förmigen Schenkel 62 und einen geraden Schenkel 63 auf, wobei die beiden Schenkel 62 und 63 durch ein Gelenk 64 verbunden sind. Das Gelenk 64 befindet sich am langen Schenkel des L-förmigen Schenkels 62 vom Ende leicht versetzt und am geraden Schenkel 63 von dessen Ende etwas entfernt. Zum Vorspannen wird der L-förmige Schenkel 62 um den Rahmen 32 des Solarmoduls 3a herum gelegt und der über das Gelenk 64 überstehende Bereich des Schenkels 63 in den Bereich unterhalb des überstehenden Schenkels 143 am Steg 14 eingebracht. Die beiden Schenkel 62 und 63 der Vorrichtung 61 werden zum Vorspannen auseinander gedrückt, so dass das Solarmodul 3a gegen die Auflagefläche 145 gepresst wird.

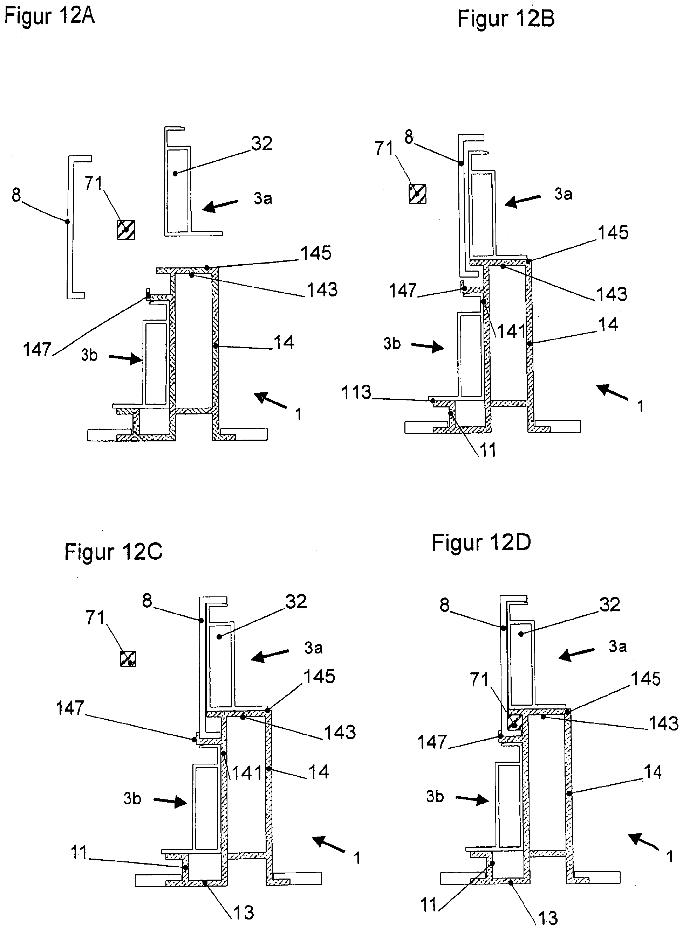

Die Figuren 12A bis 12D zeigen den Verklemmprozess des in Figur 11A dargestellten Solarmodulmontagesystems. Figur 12A zeigt das Solarmodulmontagesystem vor dem Auflegen des als zweiter Seitenrandbereich 32 ausgebildeten Rahmens des Solarmoduls 3A. Außerdem sind das Klemmstück 8 sowie das zusätzliche Verklemmelement 71 im Querschnitt dargestellt. Das zweite Solarmodul 3b ist bereits in einen Zwischenraum zwischen Einlegefläche 113 des Einlegesteges 11 und den Fortsatz 147 des Steges 14 eingelegt.

Figur 12B zeigt das Solarmodul 3a nach dem Auflegen der Unterseite des Rahmens 32 auf die Auflagefläche 145. Weiterhin ist dargestellt, dass das Klemmstück 8 von links so an den zweiten Seitenrandbereich 32 des ersten Solarmoduls 3a und den Steg 14 herangeführt wird, dass der untere kurze Schenkel 90 des Klemmstücks 8 in den Zwischenraum zwischen dem über den linken Schenkel 141 des Steges 14 überstehenden Schenkel 143 und den Fortsatz 147 eindringt und dass der obere kurze Schenkel 82 des Klemmstücks 8 über die Oberseite des Rahmens 32 des Solarmoduls 3a übersteht. Das zusätzliche Verklemmelement 71 ist vorerst an dem Verklemmprozess nicht beteiligt.

Figur 12C zeigt nun, dass nach dem Heranführen des Klemmstücks 8 an das Solarmodul 3a und den Steg 14, das Klemmstück 8 vertikal nach unten bewegt wird, so dass der untere Schenkel 90 des Klemmstücks 8 mit dem Fortsatz 147 in Berührung ist und dass der obere kurze Schenkel 82 des Klemmstücks 8 in Kontakt mit der Oberseite des Rahmens 32 des Solarmoduls 3a ist. Der lange Schenkel 81 des Klemmstücks 8 ist dabei mit der vertikalen Seite des Rahmens 32 des Solarmoduls 3a in Berührung.

Figur 12D zeigt das Solarmodulmontagesystem im verklemmten Zustand. Dazu wurde in einem letzten Schritt das zusätzliche Verklemmelement 71 parallel zu einer Richtung senkrecht zur Bildebene in den Zwischenraum zwischen unterem kurzen Schenkel 90 des Klemmstücks 8 und überstehenden Bereich des Schenkels 143 des Hauptsteges 14 eingebracht, so dass eine feste Verklemmung zustande kommt.

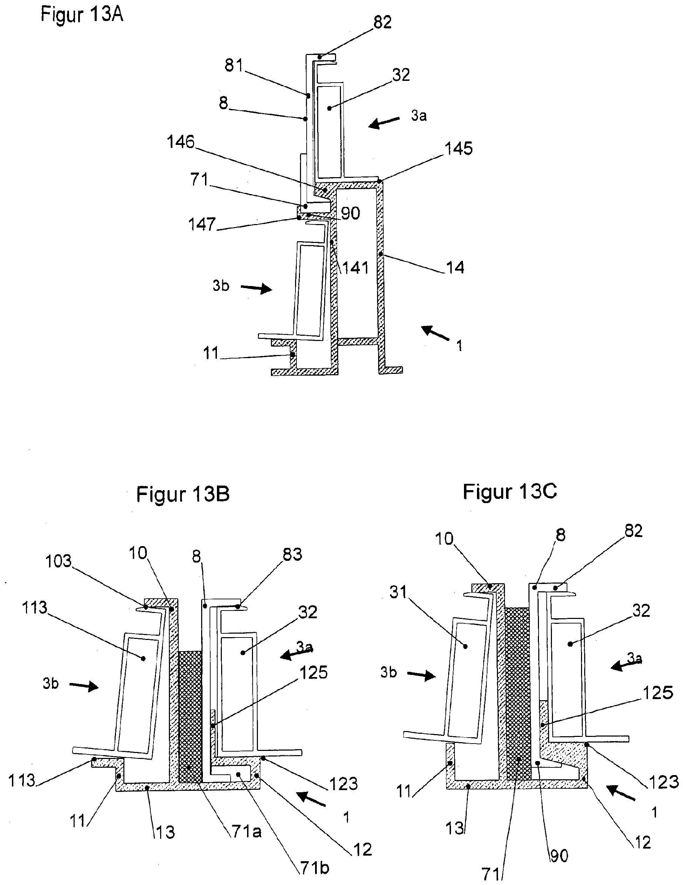

Die Figuren 13A bis 13C zeigen ausschnittsweise weitere Beispiele für Solarmodulmontagesysteme, wobei das Klemmstück 8 mit Hilfe eines zusätzlichen Verklemmelementes 71 mit der Halteschiene 1 verklemmt ist, um das erste Solarmodul 3a sicher zu verklemmen. Figur 13A zeigt eine Halteschiene 1, welche identisch ausgebildet ist, wie die unter Figur 9E beschriebene Halteschiene 1. Auch das Klemmstück 8 ist ähnlich ausgebildet, wobei das Klemmstück in Figur 13A keine Klemmzunge aufweist. Das zusätzliche Verklemmelement 71 ist ein L-förmig ausgebildeter Klotz. Das erste Solarmodul 3a liegt mit seinem als ersten Seitenrandbereich 32 ausgebildeten Rahmen auf der Auflagefläche 145 des Steges 14 auf. Das Klemmstück 8 ist so angeordnet, dass der Schenkel 82 und bereichsweise der Schenkel 81 des Klemmstückes 8 in Kontakt sind. Der Schenkel 90 des Klemmstückes 8 ist in den Zwischenraum zwischen Fortsatz 147 des Steges 14 und den abgeschrägten Übergangsbereich 146 unterhalb des überstehenden Bereichs des Schenkels 143 angeordnet. Das zusätzliche Verklemmelement 71 ist mit seinem kurzen Schenkel Auf der der Grundfläche 13 abgewandten Seite des langen Schenkels des Fortsatzes 147 rechts vom kurzen Schenkel des L-förmigen Fortsatzes 147 angeordnet. Nachdem das zusätzliche Verklemmelement 71 wegen des kurzen Schenkels des L-förmigen Fortsatzes 147 nicht nach links bewegbar ist und gleichzeitig das Klemmstück 8 nach rechts sowie nach unten drückt, ist eine sichere Befestigung des ersten Solarmoduls 3a durch Verklotzen möglich. Das zweite Solarmodul 3b ist wieder zwischen dem Einlegesteg 11 und dem Fortsatz 147 des Steges 14 eingelegt.

Figur 13B zeigt eine Halteschiene 1, welche ähnlich wie die unter Figur 9C beschriebene Halteschiene 1 ausgebildet ist. Die Halteschiene 1 der Figur 13B weist jedoch keine Hinterschneidung 106 am Hauptsteg 10 auf. Das Klemmstück 8 ist in Form einer Klammer, ähnlich wie das Klemmstück aus Figur 11A, ausgebildet. Das zusätzliche Verklemmelement ist ein länglicher Klotz mit rechteckigem Querschnitt. In Figur 13A liegt das Solarmodul 3a mit der Unterseite seines Rahmens 32 auf der Auflagefläche 123 auf. Das Klemmstück 8 ist so angeordnet, dass es mit seinem langen Schenkel 81 bereichsweise den auf dem Schenkel B 122 senkrecht stehenden Schenkel 125 des Auflagesteges 12 berührt. Der obere kürzere Schenkel 82 ist in Kontakt mit der Oberseite des Rahmens des Solarmoduls 3a. Um das Klemmstück 8 nun zu befestigen, wird einerseits von oben in den Zwischenraum zwischen Hauptsteg 10 und Klemmstück 8 der längliche Klotz 71 eingebracht. Außerdem wird ein weiteres zusätzliches Verklemmelement 71b in den Bereich unterhalb des Schenkels B 122 des Auflagesteges 12 eingebracht. Das weitere zusätzliche Verklemmelement 71b ist L-förmig ausgebildet und so angeordnet, dass der untere kurze Schenkel des Klemmstücks 8 gegen die Grundfläche 13 gedrückt wird und damit den zweiten Seitenrandbereich 32 des Solarmoduls 3a mit dem oberen kurzen Schenkel 82 des Klemmstücks 8, welches die Verklemmfläche 83 aufweist, gegen die Auflagefläche 123 am Auflagesteg 12 drückt. Das zweite Solarmodul 3b ist mit seinem ersten Seitenrandbereich 31 zwischen die Einlegefläche 113 des Einlegesteges 11 und die Gegenklemmfläche 103 des Hauptsteges 10 eingelegt.

Figur 13C weist einen ähnlichen Aufbau wie Figur 13B auf, wobei jedoch von einem weiteren zusätzlichen Verklemmelement abgesehen wird. Anstelle dessen weist der Auflagesteg 12 der Halteschiene 1 im Bereich unterhalb des Schenkels B 123 einen abgeschrägten Bereich auf, wobei der linke Rand dieses Bereiches höher als der rechte Rand oberhalb der Grundfläche 13 ausgelegt ist. Das Klemmstück 8 ist ausgebildet wie das in Figur 13A dargestellte. Das zusätzliche Verklemmelement 71 ist wiederum länglich ausgebildet und weist einen rechteckigen Querschnitt auf. Das erste Solarmodul 3a liegt mit der Unterseite des Rahmens 32 auf der Auflagefläche 123 des Auflagesteges 12 auf und berührt seitlich den vertikal auf dem Schenkel B 122 stehenden Schenkel 125. Das Klemmstück 8 ist so angeordnet, dass sein oberer Schenkel 82 über die Oberseite des Rahmens des Solarmoduls 3a übersteht. Der untere Schenkel 90 des Klemmstücks 8 ist so angeordnet, dass der sich nach außen verjüngende Schenkel 90 mit seiner Innenseite im abgeschrägten Bereich des Auflagesteges 12 mit diesem in Kontakt ist. Durch Einbringen des zusätzlichen Verklemmelementes 71 in dem Bereich zwischen dem Hauptsteg 10 und dem Klemmstück 8 wird das Klemmstück 8 nach rechts in Richtung des Auflagesteges 12 bewegt, wobei aufgrund der Schräge unterhalb des Schenkels B 122 des Auflagesteges 12 das Klemmstück 8 gleichzeitig nach unten bewegt wird und so den Rahmen 32 des Solarmoduls 3a verklemmt. Der Einlegesteg 11 ist in diesem Fall lediglich stiftförmig ausgebildet, so dass das zweite Solarmodul 3b zwischen dem maximal von der Grundfläche 13 entfernten Bereich des Einlegesteges 11 und der Gegenklemmfläche 103 des Hauptsteges 10 eingelegt ist.

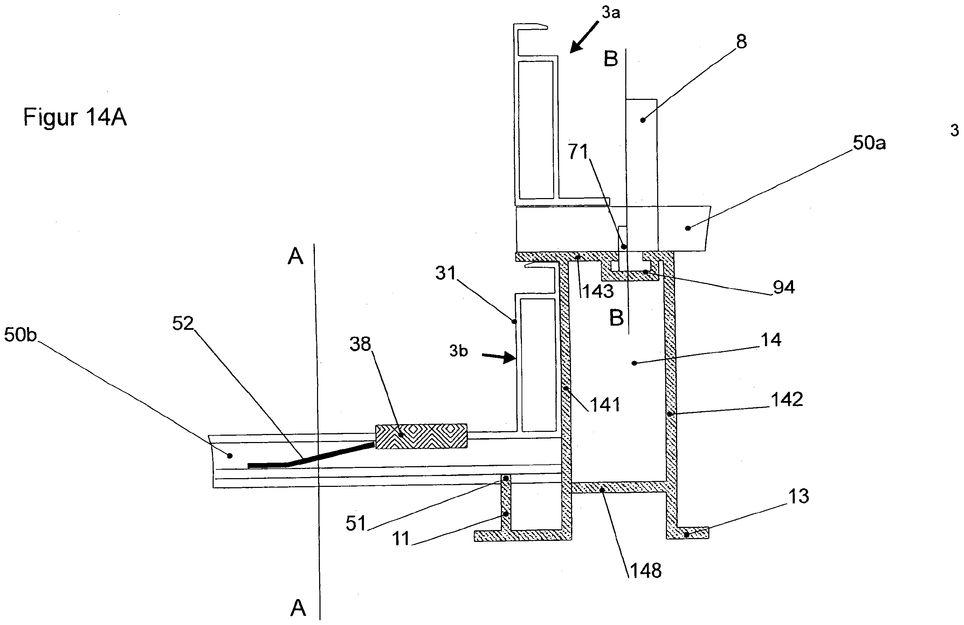

Die Figuren 14A bis 14D zeigen verschiedene Querschnitte durch ein weiteres Solarmodulmontagesystem, welches neben der Halteschiene 1 einem ersten Solarmodul 3a, einem zweiten Solarmodul 3b, einem Klemmstück 8 und einem zusätzlichen Verklemmelement 71 zwei Vertikalprofile 50a und 50b aufweist, wobei im ersten Bereich der Vertikalprofile 50a und 50b ein Federblech 52 angeordnet ist. Die Solarmodule 3a und 3b weisen in einem an den ersten Seitenrandbereich 31 angrenzenden Bereich auf ihrer Unterseite einen Anschlagklotz 38 auf.

Figur 14A zeigt den Querschnitt einer Halteschiene 1, welche einen Einlegesteg 11 und einen Steg 14 mit einem linken senkrecht auf der Grundfläche 13 stehenden Schenkel 141, einem rechten senkrecht auf der Grundfläche 13 stehenden Schenkel 142 und einem am oberen Ende des linken und des rechten Steges 141 und 142 angeordneten zur Grundfläche 13 parallelen Verbindungsschenkel 143, welcher auf der linken Seite des linken Schenkels 141 übersteht und im Bereich zwischen linkem und rechtem Schenkel 141 und 142 eine T-förmige Hinterschneidung aufweist. Der linke und der rechte Schenkel 141 und 142 des Steges 14 weisen zusätzlich im unteren Bereich einen Verbindungsschenkel 148 auf. Der Einlegesteg 11 ist stiftförmig ausgebildet. Auf dem Einlegesteg 11 liegt das zweite Vertikalprofil 50b auf, wobei das obere Ende des stiftförmig ausgebildeten Einlegestegs 11 in einer Hinterschneidung 51 in dem Vertikalprofil 50b positioniert ist. Das Vertikalprofil 50b weist einen U-förmigen Querschnitt auf, wobei seine Öffnung nach oben weist. In einem Bereich links vom Einlegesteg 11 weist das Vertikalprofil ein Federblech 51 auf, welches innerhalb des U-förmigen Vertikalprofils 50b so angeordnet ist, dass es leicht von links nach rechts ansteigt. Das zweite Solarmodul 3b weist in einem an den als erster Seitenrandbereich 31 ausgebildeten Rahmen angrenzenden Bereich einen Anschlagklotz 38 auf. Das zweite Solarmodul 3b ist zwischen der Oberseite des Vertikalprofils 50b im Bereich oberhalb der Hinterschneidung 51 und der der Grundfläche 13 zugewandten Seite des Verbindungsschenkels 143 des Steges 14 so eingelegt, dass der Stützklotz 38 des Solarmoduls 3b und das Federblech 52 ineinander eingreifen, so dass das Solarmodul gegen den linken Schenkel 141 des Steges 14 gedrückt wird.

Auf der der Grundfläche 13 abgewandten Seite des Verbindungsschenkels 143 liegt das erste Vertikalprofil 50a auf. Auf der Oberseite des Vertikalprofils 50a befindet sich die Unterseite des Rahmens des ersten Solarmoduls 3a. Das Klemmstück 8 ist länglich ausgebildet, mit einer Länge entsprechend dem Abstand zwischen linkem und rechtem Seitenrandbereich eines Solarmoduls und weist einen rechteckigen Querschnitt auf, wobei es im unteren Abschnitt eine Hinterschneidung 94 aufweist. Das zusätzliche Verklemmelement 71 ist in Form einer Klemmleiste ausgebildet. Die Vertikalprofile 50a und 50b befinden sich vorzugsweise unterhalb des rechten bzw. linken Seitenrandbereiches 31 bzw. 32 eines Solarmoduls, so dass zwischen zwei auf ein und derselben Auflagefläche aufliegende Vertikalprofile in einem vorbestimmten Abstand voneinander entfernt angeordnet sind. Um nun das Vertikalprofil 50a und das erste Solarmodul 3a mit der Halteschiene 1 zu verklemmen, wird zunächst das Vertikalprofil 50a auf den Schenkel 143 des Steges 14 aufgelegt. Anschließend wird das erste Solarmodul 3a, in welches das Klemmstück 8 eingelegt ist, auf das Vertikalprofil 50a aufgelegt und das Klemmstück 8 in die T-förmige Hinterschneidung in dem Schenkel 143 des Steges 14 eingebracht. Anschließend wird das Klemmstück 8 mit einer Klemmleiste 71 in der T-förmigen Hinterschneidung des Schenkels 141 verklotzt. Somit wird das Vertikalprofil 50a durch eine Verklemmung zwischen Solarmodulrahmen und Steg 14 über das Klemmstück 8 daran gehindert, sich von dem Schenkel 143 abzuheben.

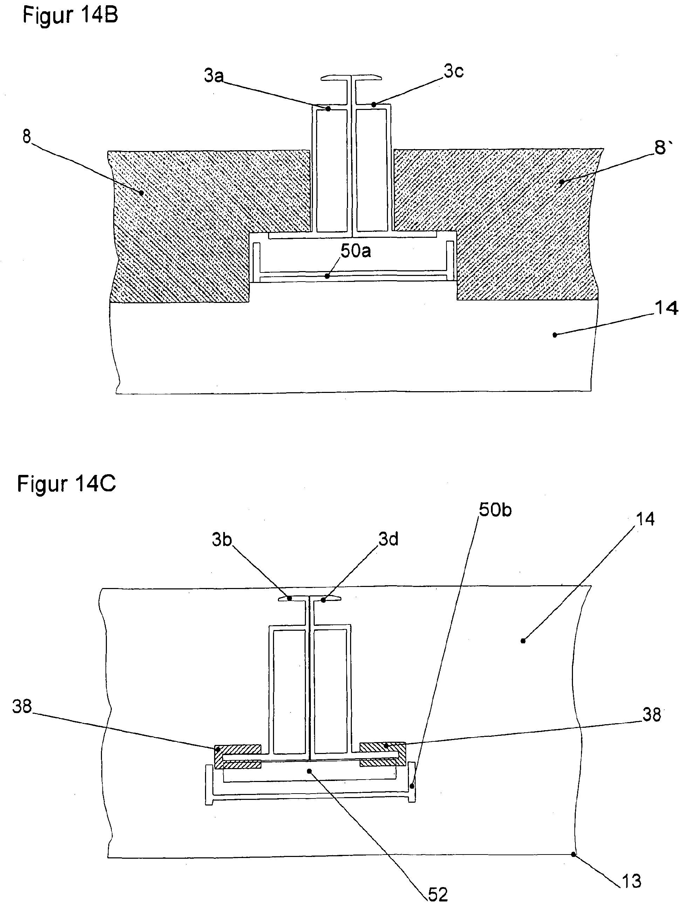

Figur 14B zeigt nun eine Art Durchsicht senkrecht zur Zeichenebene im Bereich des Klemmstücks 8 entlang der mit B gekennzeichneten Linie. Figur 14B zeigt die Längsansicht des Steges 14 der Halteschiene 1, auf welcher sich das erste Vertikalprofil 50A befindet. Oberhalb der linken und rechten Seitenwand des Vertikalprofils 50a sind der rechte Rahmen des ersten Solarmoduls 3a sowie der linke Rahmen eines zusätzlichen Solarmoduls 3c, welches benachbart angeordnet ist, angeordnet. Links des Vertikalprofils 50a und des unteren Bereiches des rechten Rahmens des ersten Solarmoduls 3a befindet sich das Klemmstück 8, welches über die Auflagefläche des Vertikalprofils 50a auf dem Steg 14 in die T-förmige Hinterschneidung im Schenkel 143 des Steges 14 eingreift. Man erkennt weiter, dass das Klemmstück 8 in seinem rechten Bereich in den Rahmen des ersten Solarmoduls 3a eingehängt ist. Rechts vom Vertikalprofil 50a ist ein weiteres Klemmstück 8' angeordnet, welches ebenfalls in die Hinterschneidung im Schenkel 143 des Steges 14 eingreift und im unteren Bereich des Rahmens des Solarmoduls 3c eingehängt ist.

Figur 14C zeigt nun eine Durchsicht von einem Schnitt senkrecht zur Bildebene des in Figur 14A dargestellten Solarmodulmontagesystems im Bereich des Federbleches 52 am Vertikalprofil 50b. Im Hintergrund ist der Steg 14 der Halteschiene 1 zu erkennen. Oberhalb der Grundfläche 13 ist ein Vertikalprofil 50b angeordnet, innerhalb dessen U-förmiger Ausbildung sich ein Federblech 52, welches in der vorliegenden Ansicht als Rechteck dargestellt ist, befindet. Oberhalb der linken und rechten Seitenwand des zweiten Vertikalprofils 50b befindet sich der rechte Rahmen des zweiten Solarmoduls 3b sowie der linke Rahmen eines weiteren zusätzlichen zum Solarmodul 3b benachbarten Solarmoduls 3d. An der Unterseite des Rahmens des Solarmoduls 3b sowie des Rahmens des Solarmoduls 3d befinden sich zwei Anschlagklötze 38 und 38', welche in der Ansicht der Figur 14C von dem Federblech teilweise überdeckt sind. In dem Schnittbereich von Federblech 52 sowie Anschlagklotz 38 und Anschlagklotzklotz 38' greifen Solarmodul und Vertikalprofil kraftschlüssig ineinander ein.

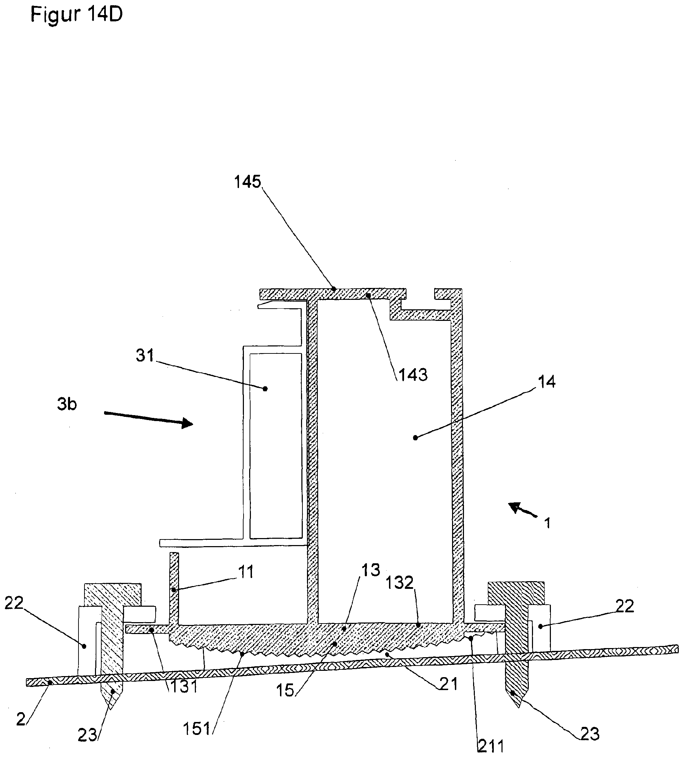

In Figur 14D ist ein Ausschnitt eines Solarmodulmontagesystems, welches an einem Dach 2 befestigt ist. Auf dem Dach 2 ist ein Grundblech 21 aufgebracht, dessen dachabgewandten Seite in Richtung der dachzugewandten Seite gewölbt ist. Die dachabgewandte Seite ist zusätzlich mit Zacken 211 versehen. Der zweite Bereich auf der zweiten Seite 132 der Grundfläche 13 der Halteschiene 1 ist wie der zweite Bereich der in Figur 14A abgebildeten Halteschiene ausgebildet. Der erste Bereich der Halteschiene 1 ragt in Form einer Wölbung 15 auf der ersten Seite 131 aus der Grundfläche 13 hervor. Die Wölbung 15 ist mit Zacken 151 versehen. In Figur 14D ist die Halteschiene nun mit ihrer Wölbung 15 in ihrem ersten Bereich auf der Grundblech 21 aufgesetzt, so dass die Zacken 151 der Wölbung 15 der Halteschiene 1 und die Zacken 211 des Grundbleches 21 zumindest bereichsweise ineinander einrasten. Die Befestigung der Halteschiene 1 am Dach 2 erfolgt dann mit Hilfe von Winkelstücken 22, welche mit Schrauben 23 am Dach 2 befestigt sind. Die Winkelstücke 22 sind dabei so angeordnet, dass jeweils einer ihrer Schenkel gegen die Oberseite 132 der Grundfläche 13 der Halteschiene 1 im Bereich links des Einlegesteges 11 oder rechts des Steges 14 der Halteschiene 1 drückt und somit die Halteschiene 1 kraft- und formschlüssig gegen das Grundblech 21 am Dach 2 presst. Zwischen Einlegesteg und dem überstehenden Teil des Verbindungsschenkels 143 des Steges 14 ist wie auch in Figur 14A gezeigt der Rahmen 31 des Solarmoduls 3b eingelegt.

Figur 15A zeigt den Querschnitt eines Solarmoduls 3 eines erfindungsgemäßen Solarmodulmontagesystems, welches als Glas-Glas-Modul 36 mit rückseitig aufgeklebten Trägerprofilen 37 ausgebildet ist. Die Trägerprofile 37 in Figur 15A sind in Form von rechteckigen Hohlschienen ausgebildet, wobei der rechteckige Querschnitt in seinem oberen Viertel rechts und links einen Vorsprung 377 aufweist.

Figur 15B zeigt die Aufsicht auf die Unterseite des Solarmoduls 3, welches in Figur 15A im Querschnitt dargestellt ist. Es ist zu erkennen, dass die Trägerprofile 37 im Bereich des ersten Seitenrandbereiches 31 bündig mit der oberen Stirnseite des Glas-Glas-Moduls 36 abschließen, während das Glas-Glas-Modul 36 im Bereich des zweiten Seitenrandbereiches 32 über die Trägerprofile 37 hervorragt.

Figur 15C zeigt einen Ausschnitt aus einem erfindungsgemäßen Solarmodulmontagesystem. Figur 15C stellt den Querschnitt einer Halteschiene 1 und die Seitenansicht eines ersten Solarmoduls 3a und eines zweiten Solarmoduls 3b sowie eines Klemmstücks 8 dar. Das erste und das zweite Solarmodul 3a und 3b weisen jeweils ein Glas-Glas-Modul 36 und Trägerprofile 37 auf. Die Halteschiene 1 weist einen Querschnitt auf, wie er bereits unter Figur 6A beschrieben wurde. Das zweite Solarmodul 3b ist mit seinem ersten Seitenrandbereich 31 zwischen der Einlegefläche des Einlegesteges 11 und der Gegenklemmfläche 103 des Hauptsteges 10 eingelegt und zusammen mit der Abdichtung 104 auf der Gegenklemmfläche 103 verklemmt. Dabei liegt das Solarmodul 3b auf der Unterseite der Trägerprofile 37 auf. Das erste Solarmodul 3a liegt im zweiten Seitenrandbereich des ersten Solarmoduls 3a mit den Trägerprofilen 37 auf der Auflagefläche 123 des Auflagesteges 12 auf. Das Glas-Glas-Modul 36 steht, wie bereits unter Figur 15B beschrieben, über die Trägerprofile 37 hinaus und überdeckt somit den Schenkel B 102 des Hauptsteges 10 in einem bestimmten Abstand. Das Klemmstück 8 befindet sich teilweise innerhalb der das Trägerprofil 37 ausbildenden Schiene und bereichsweise unterhalb des über den Schenkel A 101 des Hauptsteges 10 rechts überstehenden Teils des Schenkels B 102 des Hauptsteges 10.

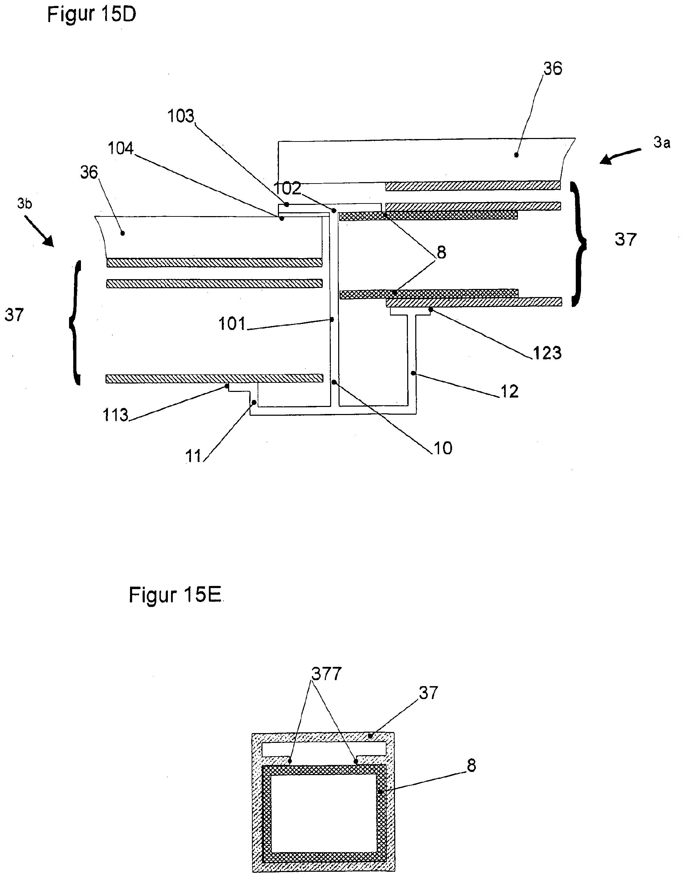

Figur 15D zeigt wiederum den in Figur 15C dargestellten Ausschnitt eines erfindungsgemäßen Solarmodulmontagesystems, wobei in Figur 15D ein Schnitt durch die Solarmodule 3a und 3b bzw. die Trägerschienen 37 gezeigt ist. Zwischen Einlegefläche 113 und Gegenklemmfläche 103 ist das Solarmodul 3b eingelegt, wobei das Solarmodul 3b auf den Trägerprofilen 37 aufliegt und das Glas-Glas-Modul 36 mit dem Abdichtgummi 104 auf der Gegenklemmfläche 103 in Kontakt ist. Auf dem Auflagesteg 12 ist ein Trägerprofil 37 des ersten Solarmoduls 3a aufgelegt und mit Hilfe des Klemmstücks 8 mit der Halteschiene 1 verklemmt. Dazu ist das Klemmstück 8, welches als Polstück mit rechteckigem Querschnitt ausgebildet ist, teilweise in das Trägerprofil unterhalb der Hinterschneidungen 377 eingeführt und bereichsweise unterhalb des rechts über den Schenkel A 101 des Hauptsteges 10 überstehenden Bereichs des Schenkels 102 des Hauptsteges 10 angeordnet, so dass das Trägerprofil 37 fest mit der Halteschiene 1 verklemmt ist. Das Glas-Glas-Modul 36 des ersten Solarmoduls 3a ragt über die Trägerprofile 37 und deckt den Schenkel B 102 des Hauptsteges 10 ab.

Figur 15E zeigt zuletzt den Querschnitt durch ein Trägerprofil 37 sowie ein in dieses Trägerprofil 37 eingeführtes Klemmstück 8. Man erkennt den rechteckigen Querschnitt des Trägerprofils 37 sowie die beiden Vorsprünge 377 im oberen Bereich innerhalb des als Profilschiene ausgebildeten Trägerprofils 37. Unterhalb der Vorsprünge 377 im Inneren des Trägerprofils 37 befindet sich der rechteckige Querschnitt eines Klemmstücks 8, welches hohl ausgebildet ist.

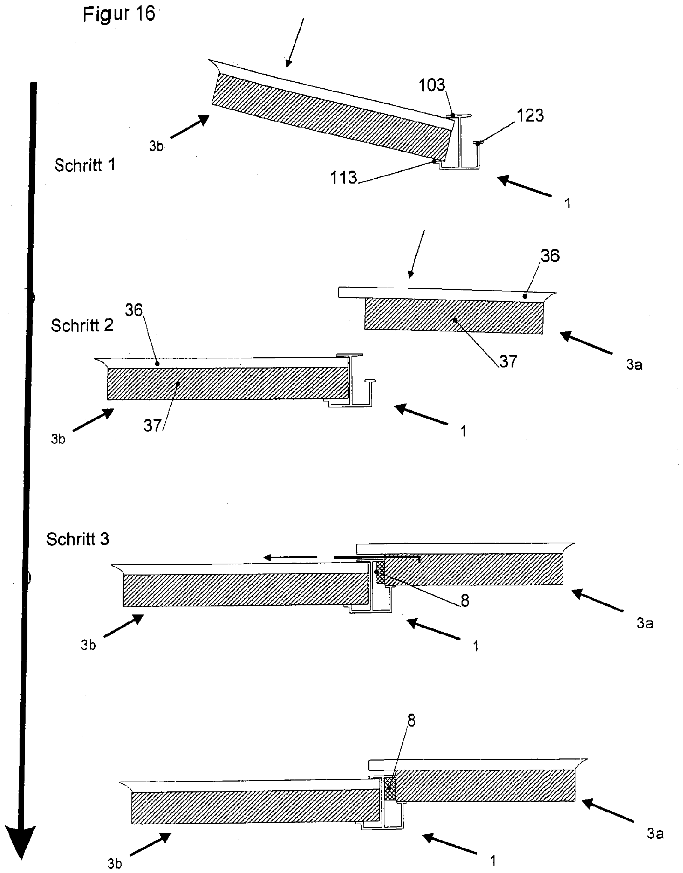

Figur 16 zeigt einen erfindungsgemäßen Montageprozess eines ersten und eines zweiten Solarmoduls 3a und 3b mit Hilfe eines in den Figuren 15C und 15D dargestellten erfindungsgemäßen Solarmodulmontagesystems. Zunächst wird in einem ersten Schritt das zweite Solarmodul 3b unter einem Winkel von höchstens 20° in die Halteschiene 1 zwischen Einlegefläche 113 und Gegenklemmfläche 103 eingelegt und anschließend in eine Ebene parallel zu der Einlegefläche 113 und der Gegenklemmfläche 103 gekippt. Dabei wird das Solarmodul 3b zwischen der Einlegefläche 113 und der Gegenklemmfläche 103 verklemmt. In einem zweiten Schritt wird das erste Solarmodul 3a, welches bereits in eine nicht dargestellte Halteschiene eingelegt ist, in eine Ebene parallel zur Auflagefläche 123 der Halteschiene 1 sowie zur Einlegefläche bzw. Gegenklemmfläche der nicht dargestellten Halteschiene, in welche das erste Solarmodul 3a eingelegt ist, gekippt. Nach dem Kippen des ersten Solarmoduls 3a liegt das erste Solarmodul 3a auf der Auflagefläche 123 des Auflagesteges 12 der Halteschiene 1 auf den Trägerprofilen 37, innerhalb derer sich das Klemmstück 8 befindet, auf, wobei das Glas-Glas-Modul 36 über den Hauptsteg 10 übersteht. Zwischen dem Schenkel B 102 des Hauptsteges 10 und der Unterseite des Glas-Glas-Moduls 36 ist ein Freiraum ausgebildet. In einem Schritt 3 wird nun mit Hilfe eines Hakens, der durch den Freiraum zwischen Hauptsteg 10 und Unterseite des Glas-Glas-Moduls 36 in den oberen Bereich des Trägerprofils 37 oberhalb der Vorsprünge 377 eingeführt ist, das Klemmstück 8 nach rechts unter den rechten Bereich des Schenkels B 102 des Hauptsteges 10 geschoben, bis das Klemmstück 8 am Hauptsteg 10 anschlägt. Im untersten Bild der Figur 16 ist nochmals der in Figur 15C dargestellte Ausschnitt des Solarmodulmontagesystems gezeigt.

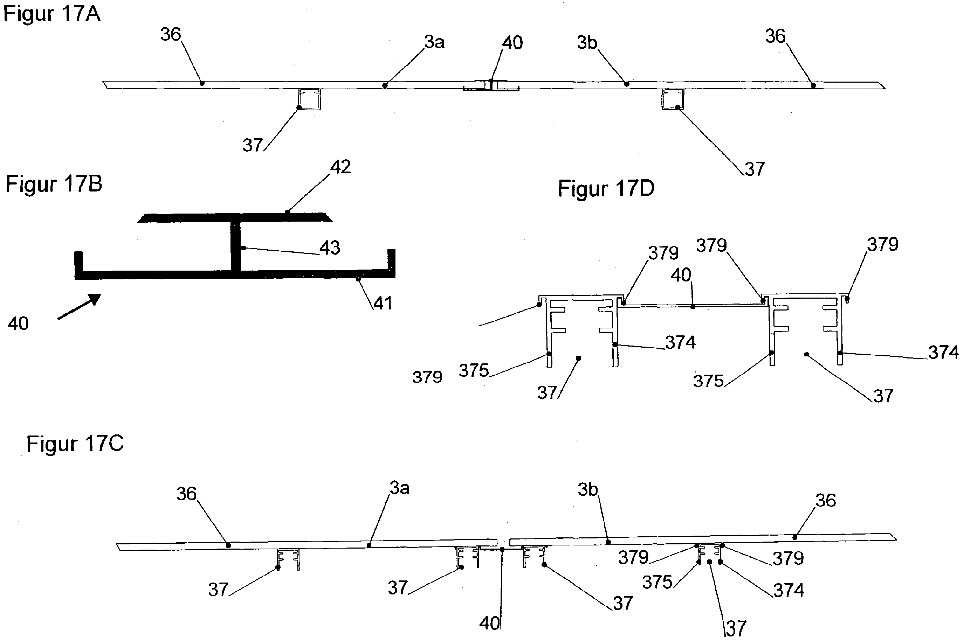

Figur 17A zeigt den Querschnitt eines Ausschnittes aus zwei benachbarten Solarmodulen 3a und 3b aus einem Glas-Glas-Modul 36 und Trägerprofilen 37, wobei die beiden Solarmodule 3a und 3b mit Hilfe eines Profilstücks 40 verbunden sind. Die Trägerprofile, welche an den Unterseiten der Glas-Glas-Module 36 der Solarmodule 3a und 3b angebracht sind, weisen den in Figur 15E beschriebenen Querschnitt auf. Das Profilstück 40 ist doppel-T-förmig ausgebildet mit einem längeren unteren horizontal angeordneten Schenkel 41, einem horizontal ausgerichteten Schenkel 42 und einem Verbindungsschenkel 43, welcher die Schenkel 41 und 42 spiegelsymmetrisch verbindet. Der untere längere Schenkel 41 weist an seinen Enden jeweils senkrecht in Richtung des kürzeren Schenkels 42 ausgerichtete Vorsprünge auf. Das Profilstück 40 ist so zwischen erstem und zweitem Solarmodul angeordnet, dass sich der rechte Seitenrandbereich des ersten Solarmoduls 3a links vom Verbindungsschenkel 43 und der linke Seitenrandbereich des zweiten Solarmoduls 3b rechts vom Verbindungsschenkel 43 zwischen unterem und unterem Schenkel 41 und 42 befinden. Mit Hilfe des Profilstücks 40 kann so eine regendichte Modulfläche erzeugt werden.

Figur 17C zeigt wiederum einen Querschnitt eines Ausschnittes aus zwei Solarmodulen 3a und 3b, welche mit Hilfe eines Profilstücks 14 verbunden sind. Die Solarmodule 3a und 3b bestehen aus jeweils einem Glas-Glas-Modul 36 und Trägerprofilen 37. Die Trägerprofile 37 weisen einen Querschnitt auf, wie er bereits in Figur 6B beschrieben wurde. Zusätzlich weisen die Querschnitte der Trägerprofile 36 am oberen Ende der Schenkel 374 und 375 jeweils eine Hinterschneidung 379 auf. Im rechten Seitenrandbereich des Solarmoduls 3a sowie im linken Seitenrandbereich des Solarmoduls 3b befindet sich jeweils ein Trägerprofil 37. Das Profilstück 14 ist U-förmig ausgebildet, mit zwei kurzen und einem langen Schenkel. Die kurzen Schenkel des Profilstücks 14 werden zum Verbinden der beiden Solarmodule 3a und 3b in die Hinterschneidung 379 der in den Seitenrandbereichen der Solarmodule 3a und 3b befindlichen Trägerprofile 37 verhakt. Die Verbindung zwischen Trägerprofilen und Profilstück 14 ist in Figur 17D vergrößert dargestellt. Auch mit dem in Figur 17C und 17D dargestellten Profilstück 14 ist die Möglichkeit zur regendichten Verbindung zweier benachbarter Solarmodule gegeben.

Ein besonderer Vorteil des erfindungsgemäßen Solarmodulmontagesystems besteht darin, dass die Module besser gegen Abrutschen gesichert sind und Winddruckkräfte sowie Schneelasten und Windzugkräfte besser in das Untergestell einleiten können. Insbesondere der bei Einlegeprofilen benötigte Spielraum zwischen Modul und Halteschienen wird durch das erfindungsgemäße Solarmodulmontagesystem beseitigt. Weiterhin sind für das Verklemmen keine Spezialwerkzeuge erforderlich, so dass die Montage einfach und schnell vonstatten geht.

## Patentansprüche

1. Solarmodulmontagesystem mit zumindest einer ersten und einer zweiten Halteschiene (1), wobei die erste und die zweite Halteschiene (1) horizontal ausgerichtet und in einem vordefinierten Abstand parallel zueinander angeordnet sind, mindestens einem rechteckig ausgebildeten Photovoltaikmodul (3a, 3b), das rückseitig befestigte Trägerprofile (37) aufweist, mit einem ersten Seitenrandbereich (31) und einem zum ersten Seitenrandbereich (31) parallelen zweiten Seitenrandbereich (32) sowie einem rechten und einem linken Seitenrandbereich und mindestens einem Klemmstück (8), wobei
die erste Halteschiene (1) derart ausgebildet ist, dass der erste Seitenrandbereich (31) des Photovoltaikmoduls (3b) in die erste Halteschiene (1) einlegbar ist; und wobei
die zweite Halteschiene (1) derart ausgebildet ist, dass der zweite Seitenrandbereich (32) des mindestens einen Photovoltaikmoduls (3a), gegebenenfalls über ein auf der zweiten Halteschiene (1) aufliegendes Vertikalprofil, auf die zweite Halteschiene (1) auflegbar und mittels mindestens eines Klemmstückes (8), welches für einen kraft- und/oder formschlüssigen Eingriff mit zumindest der zweiten Halteschiene (1) ausgeformt ist, mit der zweiten Halteschiene (1) verklemmbar ist,
**dadurch gekennzeichnet, dass**
die zweite Halteschiene (1) einen Auflagesteg (12) mit einer Auflagefläche (123) und einen Hauptsteg (10) mit einem parallel zur Auflagefläche (123) verlaufenden Schenkel B (102) aufweist, und das Photovoltaikmodul (3a) im zweiten Seitenrandbereich (32) mit den Trägerprofilen (37) auf die Auflagefläche (123) des Auflagesteges (12) auflegbar ist, und das Klemmstück (8) derart ausgebildet ist, dass es bereichsweise in eines der Trägerprofile (37) einschiebbar ist, und derart dass damit das eine Trägerprofil (37) mit der zweiten Halteschiene (1) verklemmbar ist, indem das Klemmstück (8) unter dem Schenkel B (102) und bis zum Anschlag gegen den Hauptsteg (10) der zweiten Halteschiene (1) schiebbar ist.

2. Solarmodulmontagesystem nach dem vorhergehenden Anspruch, **dadurch gekennzeichnet, dass** mindestens eines der Trägerprofile (37) einen rechteckigen Querschnitt aufweist, wobei innerhalb des Trägerprofils Vorsprünge (377) angeordnet sind, unterhalb derer sich im montierten Zustand das Klemmstück (8) befindet.

3. Solarmodulmontagesystem nach einem der vorhergehenden Ansprüche, **dadurch gekennzeichnet, dass** die erste und die zweite Halteschiene (1) jeweils einen ersten Bereich für eine Anbringung der Halteschiene (1) an mindestens einem ortsfesten Gegenstand und einen zweiten Bereich zum Einlegen und/oder Verklemmen eines Seitenrandbereichs (31, 32) mindestens eines Solarmoduls (3a, 3b) aufweisen.

4. Solarmodulmontagesystem nach dem vorhergehenden Anspruch, **dadurch gekennzeichnet, dass** der zweite Bereich der ersten und/oder der zweiten Halteschiene (1) einen ersten Abschnitt zum Einlegen des ersten Seitenrandbereichs (31) eines des mindestens einen Photovoltaikmoduls (3a, 3b) und/oder einen zweiten Abschnitt zum Auflegen und Verklemmen des zweiten Seitenrandbereichs (32) eines weiteren des mindestens einen Photovoltaikmoduls (3a, 3b) aufweist.

5. Solarmodulmontagesystem nach einem der vorhergehenden Ansprüche 2 oder 3, **dadurch gekennzeichnet, dass** zumindest die erste Halteschiene (1) in ihrem zweiten Bereich eine Einlegefläche (113) und eine Gegenklemmfläche (103) aufweisen, wobei Einlegefläche (113) und Gegenklemmfläche (103) in parallel zueinander angeordneten Ebenen versetzt zueinander angeordnet sind.

6. Solarmodulmontagesystem nach einem der vorhergehenden Ansprüche 2 bis 4, **dadurch gekennzeichnet, dass** zumindest die zweite Halteschiene (1) in ihrem zweiten Bereich die Auflagefläche (123) und eine Hinterschneidung zum form- und/oder kraftschlüssigen Verklemmen des mindestens einen Klemmstückes (8) aufweist und dass an dem mindestens einen Klemmstück (8) eine Verklemmfläche ausgebildet ist.

7. Solarmodulmontagesystem nach dem vorhergehenden Anspruch, **dadurch gekennzeichnet, dass** das mindestens eine Klemmstück (8) derart ausgebildet ist, dass es in die mindestens eine Hinterschneidung der zweiten Halteschiene (1) steckbar oder einhängbar oder verkeilbar und/oder mit der Hinterschneidung verrastbar ist.

8. Solarmodulmontagesystem nach einem der vorhergehenden Ansprüche, **dadurch gekennzeichnet, dass** das mindestens eine Klemmstück (8) als Klammer oder als Klemmblock oder als Klemmleiste oder als längliche Platte, insbesondere als Riegel, oder als längliches Klemmelement mit einem L- oder S- oder T- oder U-förmigen Querschnitt ausgebildet ist.

9. Solarmodulmontagesystem nach einem der vorhergehenden Ansprüche, **dadurch gekennzeichnet, dass** das mindestens eine Klemmstück (8) eine Klemmzunge oder eine Hinterschneidung aufweist.

10. Solarmodulmantagesystem nach einem der vorhergehenden Ansprüche, **dadurch gekennzeichnet, dass** die erste und/oder die zweite Halteschiene (1) mindestens ein zusätzliches Verklemmelement zum Verklemmen des mindestens einen Klemmstückes (8) aufweist.

11. Solarmodulmontagesystem nach einem der vorhergehenden Ansprüche, **dadurch gekennzeichnet, dass** das Solarmodulmontagesystem mindestens zwei Vertikalprofile aufweist, welche parallel zueinander und senkrecht zu der ersten und der zweiten Halteschiene (1) in einer Fläche, welche durch die erste und die zweite Halteschiene (1) aufgespannt wird oder dazu im Winkel von höchstens 60°, insbesondere höchstens 30°, verkippt ist, angeordnet sind.

12. Solarmodulmontagesystem nach einem der vorhergehenden Ansprüche, **dadurch gekennzeichnet, dass** das mindestens eine Solarmodul (3a, 3b) an seiner Unterseite im Bereich des ersten Seitenrandbereichs (31) einen Verklemmmechanismus, insbesondere einen an einem Bolzen drehbaren Hebel oder einen Anschlagklotz, aufweist.

13. Solarmodulmontagesystem nach einem der vorhergehenden Ansprüche, wobei der linke Seitenrandbereich des einen Photovoltaikmoduls (3a, 3b) und der rechte Seitenrandbereich des anderen Photovoltaikmoduls (3a, 3b) einander gegenüberliegen, **dadurch gekennzeichnet, dass** der linke Seitenrandbereich des einen Photovoltaikmoduls (3a, 3b) und der rechte Seitenrandbereich des anderen Photovoltaikmoduls (3a, 3b) mit einem länglichen Profilstück (40) verbunden sind.

14. Verfahren für die Montage eines Photovoltaikmoduls mit rückseitig befestigten Trägerprofilen (37) mittels eines Solarmodulmontagesystems nach einem der Ansprüche 2 bis 13,
**dadurch gekennzeichnet, dass**
der erste Seitenrandbereich (31) des mindestens einen Photovoltaikmoduls (3a, 3b) in die erste Halteschiene (1) unter einem Winkel von mehr als 0° zu einer Einlegefläche (113) der ersten Halteschiene (1) eingelegt wird;
dass der zweite Seitenrandbereich (32) in eine Ebene parallel zur Einlegefläche (113) der ersten Halteschiene (1) gebracht wird und auf eine Auflagefläche (123) der zweiten Halteschiene (1) aufgelegt wird, wobei das Photovoltaikmodul (3a, 3b) im zweiten Seitenrandbereich (32) mit den Trägerprofilen (37) auf der Auflagefläche (123) aufgelegt wird und sich das Klemmstück (8) bereichsweise innerhalb eines der Trägerprofile (37) bezüglich des montierten Zustands unterhalb der Vorsprünge (377) befindet;
dass ein Haken in einen bezüglich des montierten Zustands oberen Bereich des einen Trägerprofils (37) oberhalb der Vorsprünge (377) eingeführt wird, und
dass mittels des Hakens das Klemmstück (8) unter dem Schenkel B (102) und bis zum Anschlag gegen den Hauptsteg (10) der zweiten Halteschiene (1) geschoben wird und dadurch das Trägerprofil (37) mit der zweiten Halteschiene (1) verklemmt wird.

15. Verwendung des Solarmodulmontagesystems nach einem der Ansprüche 1 bis 13 und/oder eines Verfahrens nach Anspruch 14 zur Anbringung mindestens eines Photovoltaikmoduls (3a, 3b) auf mindestens einem ortsfesten Gegenstand, vorzugsweise an einer Gebäudeaußenhaut oder einem Rahmengerüst.

## Claims

1. Solar-module-mounting system having at least one first and one second retaining rail (1), wherein the first and the second retaining rails (1) are oriented horizontally and are arranged parallel to one another at a predefined distance apart, having at least one rectangular photovoltaic module (3a, 3b), having carrier profiles (37) fastened on its rear side and having a first side-periphery region (31) and a second side-periphery region (32), which is parallel to the first side-periphery region (31), and also a right-hand and a left-hand side-periphery region, and having at least one clamping piece (8), wherein
the first retaining rail (1) is designed such that the first side-periphery region (31) of the photovoltaic module (3b) can be inserted into the first retaining rail (1); and wherein
the second retaining rail (1) is designed such that the second side-periphery region (32) of the at least one photovoltaic module (3a) can be positioned on the second retaining rail (1), possibly via a vertical profile resting on the second retaining rail (1), and can be clamped to the second retaining rail (1) by means of at least one clamping piece (8), which is formed for force-fitting and/or for form-fitting engagement with at least the second retaining rail (1),
**characterized in that**
the second retaining rail (1) has a bearing crosspiece (12) with a bearing surface (123) and also has a main crosspiece (10) with a limb B (102), which runs parallel to the bearing surface (123), and the photovoltaic module (3a) can have the second side-periphery region (32) positioned on the bearing surface (123) of the bearing crosspiece (12) by way of the carrier profiles (37), and the clamping piece (8) is designed such that it can be pushed, in part, into one of the carrier profiles (37), and such that the one carrier profile (37) can thus be clamped to the second retaining rail (1), by it being possible for the clamping piece (8) to be pushed beneath the limb B (102) until it stops against the main crosspiece (10) of the second retaining rail (1).

2. Solar-module-mounting system according to the preceding claim, **characterized in that** at least one of the carrier profiles (37) has a rectangular cross section, wherein protrusions (377) are arranged within the carrier profile and, in the mounted state, the clamping piece (8) is located beneath said protrusions.

3. Solar-module-mounting system according to either of the preceding claims, **characterized in that** the first and the second retaining rails (1) each have a first region for fitting the retaining rail (1) on at least one stationary object and a second region for the insertion and/or clamping of a side-periphery region (31, 32) of at least one solar module (3a, 3b).

4. Solar-module-mounting system according to the preceding claim, **characterized in that** the second region of the first and/or of the second retaining rail (1) has a first portion for the insertion of the first side-periphery region (31) of either of the at least one photovoltaic module (3a, 3b) and/or a second portion for bearing and clamping the second side-periphery region (32) of a further one of the at least one photovoltaic module (3a, 3b) .

5. Solar-module-mounting system according to either of preceding Claims 2 and 3, **characterized in that** at least the first retaining rail (1), in its second region, have an insertion surface (113) and a clamping-abutment surface (103), wherein the insertion surface (113) and clamping-abutment surface (103) are offset in relation to one another in parallel planes.

6. Solar-module-mounting system according to either of preceding Claims 2 to 4, **characterized in that** at least the second retaining rail (1), in its second region, has the bearing surface (123) and an undercut for the form-fitting and/or force-fitting clamping of the at least one clamping piece (8), and **in that** a clamping surface is formed on the at least one clamping piece (8).

7. Solar-module-mounting system according to the preceding claim, **characterized in that** the at least one clamping piece (8) is designed such that it can be plugged or fitted or wedged into the at least one undercut of the second retaining rail (1) and/or can be latched to the undercut.

8. Solar-module-mounting system according to one of the preceding claims, **characterized in that** the at least one clamping piece (8) is designed in the form of a bracket or of a clamping block or of a clamping strip or of an elongate plate, in particular of a catch, or of an elongate clamping element with an L-shaped or S-shaped or T-shaped or U-shaped cross section.

9. Solar-module-mounting system according to one of the preceding claims, **characterized in that** the at least one clamping piece (8) has a clamping tongue or an undercut.

10. Solar-module-mounting system according to one of the preceding claims, **characterized in that** the first and/or the second retaining rail (1) have/has at least one additional clamping element for clamping the at least one clamping piece (8).

11. Solar-module-mounting system according to one of the preceding claims, **characterized in that** the solar-module-mounting system has at least two vertical profiles, which are arranged parallel to one another, and perpendicularly to the first and the second retaining rails (1), in a surface which is defined by the first and the second retaining rails (1) or is tilted at an angle of at most 60°, in particular at most 30°, in relation thereto.

12. Solar-module-mounting system according to one of the preceding claims, **characterized in that** the at least one solar module (3a, 3b) has on its underside, in the region of the first side-periphery region (31), a clamping mechanism, in particular a stop block or a lever which can be rotated on a bolt.

13. Solar-module-mounting system according to one of the preceding claims, wherein the left-hand side-periphery region of the one photovoltaic module (3a, 3b) and the right-hand side-periphery region of the other photovoltaic module (3a, 3b) are located opposite one another, **characterized in that** the left-hand side-periphery region of the one photovoltaic module (3a, 3b) and the right-hand side-periphery region of the other photovoltaic module (3a, 3b) are connected with an elongate profile piece (40).

14. Method for mounting a photovoltaic module, which has carrier profiles (37) fastened on its rear side, by means of a solar-module-mounting system according to one of Claims 2 to 13,
**characterized**
**in that** the first side-periphery region (31) of the at least one photovoltaic module (3a, 3b) is inserted into the first retaining rail (1) at an angle of more than 0° in relation to an insertion surface (113) of the first retaining rail (1);
**in that** the second side-periphery region (32) is moved into a plane parallel to the insertion surface (113) of the first retaining rail (1) and is positioned on a bearing surface (123) of the second retaining rail (1), wherein the photovoltaic module (3a, 3b) has the second side-periphery region (32) positioned on the bearing surface (123) by way of the carrier profiles (37) and the clamping piece (8) is located, in part, within one of the carrier profiles (37), beneath the protrusions (377), as seen in relation to the mounted state;
**in that** a hook is introduced into an upper region of the one carrier profile (37), as seen in relation to the mounted state, above the protrusions (377), and
**in that**, by means of the hook, the clamping piece (8) is pushed beneath the limb B (102) until it stops against the main crosspiece (10) of the second retaining rail (1) and, as a result, the carrier profile (37) is clamped to the second retaining rail (1).

15. Use of the solar-module-mounting system according to one of Claims 1 to 13 and/or of a method according to Claim 14 for fitting at least one photovoltaic module (3a, 3b) on at least one stationary object, preferably on a building shell or a frame scaffold.

## Revendications

1. Système de montage de modules solaires avec au moins un premier et un deuxième rail de maintien (1), le premier et le deuxième rail de maintien (1) étant orientés horizontalement et disposés parallèlement l'un à l'autre avec une distance prédéfinie, avec au moins un module photovoltaïque (3a, 3b) constitué de façon rectangulaire qui comporte des profilés porteurs (37) fixés côté arrière, avec une première zone de bord latéral (31) et une deuxième zone de bord latéral (32) parallèle à la première zone de bord latéral (31), ainsi qu'avec une zone de bord latéral droite et une zone de bord latéral gauche et au moins une pièce de serrage (8),
le premier rail de maintien (1) étant constitué de telle sorte que la première zone de bord latéral (31) du module photovoltaïque (3b) peut être insérée dans le premier rail de maintien (1) ; et
le deuxième rail de maintien (1) étant constitué de telle sorte que la deuxième zone de bord latéral (32) du module photovoltaïque (3a) au moins au nombre de un, éventuellement par le biais d'un profilé vertical reposant sur le deuxième rail de maintien (1), peut être posée sur le deuxième rail de maintien (1) et peut être coincée avec le deuxième rail de maintien (1) au moyen d'au moins une pièce de serrage (8) qui est formée pour un engrènement par liaison de force et/ou de forme avec au moins le deuxième rail de maintien (1),
**caractérisé en ce que**
le deuxième rail de maintien (1) comporte une entretoise d'appui (12) avec une surface d'appui (123), et une entretoise principale (10) avec une branche B (102) parallèle à la surface d'appui (123), et le module photovoltaïque (3a) peut, dans la deuxième zone de bord latéral (32) avec les profilés porteurs (37), être posé sur la surface d'appui (123) de l'entretoise d'appui (12), et la pièce de serrage (8) est constituée de telle sorte qu'elle peut être introduite par tronçons dans un des profilés porteurs (37), et de telle sorte qu'un profilé porteur (37) peut ainsi être coincé avec le deuxième rail de maintien (1) par le fait que la pièce de serrage (8) peut être poussée sous la branche B (102) et jusqu'à la butée contre l'entretoise principale (10) du deuxième rail de maintien (1).

2. Système de montage de modules solaires selon la revendication précédente, **caractérisé en ce qu'**au moins un des profilés porteurs (37) comprend une section transversale rectangulaire, des saillies (377) étant disposées à l'intérieur du profilé porteur, au-dessous desquelles se trouve la pièce de serrage (8) dans l'état monté.

3. Système de montage de modules solaires selon l'une des revendications précédentes, **caractérisé en ce que** le premier et le deuxième rail de maintien (1) comportent respectivement une première zone pour une mise en place du rail de maintien (1) sur au moins un objet stationnaire, et une deuxième zone destinée à l'insertion et/ou au coincement d'une zone de bord latéral (31, 32) d'au moins un module solaire (3a, 3b).

4. Système de montage de modules solaires selon la revendication précédente, **caractérisé en ce que** la deuxième zone du premier et/ou du deuxième rail de maintien (1) comporte un premier tronçon destiné à l'insertion de la première zone de bord latéral (31) d'un du module photovoltaïque (3a, 3b) au moins au nombre de un et/ou un deuxième tronçon pour le placement et le coincement de la deuxième zone de bord latéral (32) d'un autre du module photovoltaïque (3a, 3b) au moins au nombre de un.

5. Système de montage de modules solaires selon l'une des revendications précédentes 2 ou 3, **caractérisé en ce qu'**au moins le premier rail de maintien (1) comporte dans sa deuxième zone une surface d'insertion (113) et une contre-surface de serrage (103), la surface d'insertion (113) et la contre-surface de serrage (103) étant disposées de façon décalée l'une par rapport à l'autre dans des plans disposés parallèlement l'un à l'autre.

6. Système de montage de modules solaires selon l'une des revendications précédentes 2 à 4, **caractérisé en ce qu'**au moins le deuxième rail de maintien (1) comporte dans sa deuxième zone la surface d'appui (123) et une contre-dépouille destinée au coincement, par liaison de forme et/ou de force, de la pièce de serrage (8) au moins au nombre de un, et **en ce qu'**une surface de coincement est constituée sur la pièce de serrage (8) au moins au nombre de un.

7. Système de montage de modules solaires selon la revendication précédente, **caractérisé en ce que** la pièce de serrage (8) au moins au nombre de un est constituée de telle sorte qu'elle peut être enfichée ou suspendue ou calée dans la contre-dépouille au moins au nombre de un du deuxième rail de maintien (1) et/ou peut être encliquetée avec la contre-dépouille.

8. Système de montage de modules solaires selon l'une des revendications précédentes, **caractérisé en ce que** la pièce de serrage (8) au moins au nombre de un est constituée en tant qu'agrafe ou en tant que bloc de serrage ou en tant que barrette de serrage ou en tant que plaque allongée, en particulier en tant que loquet, ou en tant qu'élément de serrage allongé avec une section transversale en forme de L ou de S ou de T ou de U.

9. Système de montage de modules solaires selon l'une des revendications précédentes, **caractérisé en ce que** la pièce de serrage (8) au moins au nombre de un comporte une languette de serrage ou une contre-dépouille.

10. Système de montage de modules solaires selon l'une des revendications précédentes, **caractérisé en ce que** le premier et/ou le deuxième rail de maintien (1) comporte au moins un élément de coincement supplémentaire destiné au coincement de la pièce de serrage (8) au moins au nombre de un.

11. Système de montage de modules solaires selon l'une des revendications précédentes, **caractérisé en ce que** le système de montage de modules solaires présente au moins deux profilés verticaux qui sont disposés parallèlement l'un à l'autre et verticalement par rapport au premier et au deuxième rail de maintien (1) dans une surface qui est définie par le premier et le deuxième rail de maintien (1) ou qui est basculée par rapport à cela en formant un angle de 60° maximum, en particulier de 30° maximum.

12. Système de montage de modules solaires selon l'une des revendications précédentes, **caractérisé en ce que** le module solaire (3a, 3b) au moins au nombre de un comporte sur son côté inférieur, dans la zone de la première zone de bord latéral (31), un mécanisme de coincement, en particulier un levier pouvant tourner sur un axe ou une cale de butée.

13. Système de montage de modules solaires selon l'une des revendications précédentes, **caractérisé en ce que** la zone de bord latéral gauche d'un module photovoltaïque (3a, 3b) et la zone de bord latéral droite de l'autre module photovoltaïque (3a, 3b) se font face, **caractérisé en ce que** la zone de bord latéral gauche d'un module photovoltaïque (3a, 3b) et la zone de bord latéral droite de l'autre module photovoltaïque (3a, 3b) sont raccordées à une pièce profilée (40) allongée.

14. Procédé destiné au montage d'un module photovoltaïque avec des profilés porteurs (37) fixés côté arrière au moyen d'un système de montage de modules solaires selon l'une des revendications 2 à 13,
**caractérisé en ce que**
la première zone de bord latéral (31) du module photovoltaïque (3a, 3b) au moins au nombre de un est insérée dans le premier rail de maintien (1) en formant un angle de plus de 0° avec une surface d'insertion (113) du premier rail de maintien (1) ;
**en ce que** la deuxième zone de bord latéral (32) est placée dans un plan parallèlement à la surface d'insertion (113) du premier rail de maintien (1) et est posée sur une surface d'appui (123) du deuxième rail de maintien (1), le module photovoltaïque (3a, 3b), dans la deuxième zone de bord latéral (32) avec les profilés porteurs (37), étant posé sur la surface d'appui (123), et la pièce de serrage (8) se trouvant par tronçons à l'intérieur d'un des profilés porteurs (37) au-dessous des saillies (377) par rapport à l'état monté;
**en ce qu'**un crochet, dans la zone supérieure d'un profilé porteur (37) par rapport à l'état monté, est introduit au-dessus des saillies (377), et
**en ce que**, au moyen du crochet, la pièce de serrage (8) est poussée sous la branche B (102) et jusqu'à la butée contre l'entretoise principale (10) du deuxième rail de maintien (1) et, de ce fait, le profilé porteur (37) est coincé avec le deuxième rail de maintien (1).

15. Utilisation du système de montage de modules solaires selon l'une des revendications 1 à 13 et/ou d'un procédé selon la revendication 14 pour la mise en place d'au moins un module photovoltaïque (3a, 3b) sur au moins un objet stationnaire, de préférence sur une enveloppe extérieure de bâtiment ou sur une ossature.
